(19) Europäisches Patentamt / European Patent Office / Office européen des brevets

(11) **EP 1 331 278 B1**

(12) **EUROPEAN PATENT SPECIFICATION**

(45) Date of publication and mention
of the grant of the patent:
**08.06.2016 Bulletin 2016/23**

(21) Application number: **01965664.4**

(22) Date of filing: **14.09.2001**

(51) Int Cl.:
*C21C 1/02* (2006.01)          *C21C 7/06* (2006.01)
*C21C 7/072* (2006.01)        *C21C 7/076* (2006.01)
*C21C 7/04* (2006.01)

(86) International application number:
**PCT/JP2001/008011**

(87) International publication number:
**WO 2002/022891 (21.03.2002 Gazette 2002/12)**

(54) **REFINING AGENT AND REFINING METHOD**

FRISCHMITTEL UND FRISCHVERFAHREN

AGENT D'AFFINAGE ET PROCEDE D'AFFINAGE

(84) Designated Contracting States:
**DE GB**

(30) Priority: **14.09.2000 JP 2000280315**
**07.09.2001 JP 2001271824**

(43) Date of publication of application:
**30.07.2003 Bulletin 2003/31**

(73) Proprietor: **JFE Steel Corporation**
**Tokyo, 100-0011 (JP)**

(72) Inventors:
• **NAKAI, Yoshie**
**c/o NKK Corporation**
**Chiyoda-ku,**
**Tokyo 100-0005 (JP)**
• **MURAI, Takeshi**
**c/o NKK Corporation**
**Chiyoda-ku,**
**Tokyo 100-0005 (JP)**
• **MATSUNO, Hidetoshi**
**c/o NKK Corporation**
**Chiyoda-ku,**
**Tokyo 100-0005 (JP)**
• **KIKUCHI, Yoshiteru**
**c/o NKK Corporation**
**Chiyoda-ku,**
**Tokyo 100-0005 (JP)**
• **TAKAHASHI, Kenji**
**c/o NKK Corporation**
**Chiyoda-ku,**
**Tokyo 100-0005 (JP)**

• **NIMURA, Yoichi**
**c/o NKK Corporation**
**Chiyoda-ku,**
**Tokyo 100-0005 (JP)**
• **SHIMIZU, Hiroshi**
**c/o NKK Corporation**
**Chiyoda-ku,**
**Tokyo 100-0005 (JP)**
• **ISAWA, Tomoo**
**c/o NKK Corporation**
**Chiyoda-ku,**
**Tokyo 100-0005 (JP)**
• **KAWASHIMA, Takeshi**
**c/o Yoshizawa Lime Ind. Co.,LTD**
**Chuo-ku,**
**Tokyo 103-0024 (JP)**
• **OKAMURA, Tatsuya**
**c/o Yoshizawa Lime Ind. Co.,LTD**
**Chuo-ku,**
**Tokyo 103-0024 (JP)**

(74) Representative: **Modiano, Micaela Nadia**
**Modiano Josif Pisanty & Staub Ltd**
**Thierschstrasse 11**
**80538 München (DE)**

(56) References cited:
JP-A- 1 234 511      JP-A- 10 017 913
JP-A- 10 317 035    JP-A- 10 317 035
JP-A- 10 317 036    JP-A- 11 106 817
JP-A- 11 106 817    JP-A- 2000 109 920
US-A- 4 154 605      US-A- 4 708 737
US-A- 5 366 539

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to a molten iron refining agent and refining method.

[Background Art]

Refining agents for molten iron or molten steel are required to be inexpensive, as well as causing an effective refining reaction. For example, desulfurization flux widely used in desulfurization of molten pig iron, such as 95 mass% CaO and 5 mass% $CaF_2$, contains CaO, which is inexpensive, as the main component. Metal Mg is also known as desulfurization flux for molten pig iron. Metal Mg readily reacts with S contained in molten pig iron and produces MgS. Since Mg has a low boiling point of 1,107°C, it is vaporized in molten pig iron at a temperature of 1,250 to 1,500°C, and generates Mg vapor. A desulfurization reaction by Mg and a desulfurization reaction by CaO are expressed by the following formulas (1) and (2).

$$\underline{Mg} \pm \underline{S} \rightarrow (MgS) \qquad (1)$$

$$(CaO) + S \rightarrow (CaS) + \underline{O} \qquad (2)$$

Specifically, Mg vapor dissolves in molten pig iron, reacts with sulfur S contained in the molten pig iron to produce MgS, and rises to the surface of the molten pig iron bath. CaO reacts with S contained in molten pig iron to generate CaS, and rises to the surface of the molten pig iron bath.

Mg desulfurization set out in the formula (1) has a desulfurization rate higher than CaO desulfurization set out in the formula (2). Accordingly, where Mg desulfurization is used, a predetermined target level [S] can be attained with a smaller desulfurization agent unit requirement and in a shorter time.

However, although Mg desulfurization has such' an advantage, it is out of the mainstream. This is so, because the raw material, i.e., metal Mg, is expensive, and there has been found no merit, which can surpass inexpensive CaO, where being used as the main component in desulfurization flux.

On the other hand, Jpn. Pat. Appln. KOKAI Publication No. 10-17913 discloses a method of desulfurizing molten pig iron by adding a desulfurization agent containing MgO and Al to the molten pig iron; causing Al and MgO to react with each other in the molten pig iron thereby producing Mg vapor and $MgO \cdot Al_2O_3$; and causing the Mg vapor thus produced to react with S dissolved in the molten pig iron, thereby producing and precipitating MgS. In this technique, the Mg vapor is effectively generated in the molten pig iron, using a reaction expressed by the following formula (3).

$$4MgO + 2al \rightarrow 3Mg\ (g) + MgO \cdot Al_2O_3 \qquad (3)$$

According to this method, since the main raw materials are MgO and Al, which are less expensive than metal Mg, the economical disadvantage of Mg desulfurization can be reduced.

However, the technique of Jpn. Pat. Appln. KOKAI Publication No. 10-17913 cannot allow all the Mg of MgO to change into metal Mg, but causes the Mg of MgO to be partly left as magnesia spinel $MgO \cdot Al_2O_3$, as shown in the formula (3). Accordingly, since the refining efficiency of this technique is not necessarily sufficient, it is less than enough to exert the economical effect described above. In addition, although MgO and Al are less expensive than Mg, they are not so inexpensive; which creates demands for flux still less expensive.

JPH11106817 discloses desulfurization by adding a desulfurizing agent containing Al, MgO and CaO into molten iron. The MgO, Al and CaO concentrations in the desulfurizing agent is desirable to be in the range of 0.340-1.335 Al/MgO by wt. ratio and 0.3-1.5 CaO/MgO by wt. ratio to efficiently generate Mg vapor. JPH1017913 discloses desulfurization by using a desulfurizing agent containing Al and MgO. The sulfurizing agent containing Al and MgO is added into the molten iron and Al and MgO are reacted in the molten iron and Mg vapor and MgO.

JPH10317035 discloses a desulphurization method of the molten ferrous alloy wherein a flux which contains the mixture where MgO and the metallic Al in a weight ratio of MgO/Al is <=3.0, and containing 1-10 wt.% halide or oxide of an alkaline earth metal or alkaline metal relative to Al, is fed in the molten ferrous metal. US5366539 discloses a desulphurization treatment of a pig iron melt using and desulfurization agent comprising .90% of dolomite and 10% of Al.

[Disclosure of Invention]

An object of the present invention is to provide a refining agent, which uses a Mg source and allows molten iron refining to be performed efficiently and inexpensively, and a refining method using the agent.

The present invention provides a refining agent as a desulfurizing agent, the refining agent consisting of light-burnt dolomite as a MgO source and a CaO source, a metal Al source, and optionally at least one of another MgO source and another CaO source, all as source materials, optionally along with a forming binder, wherein Al/MgO is 0.05 or more and 0.6 or less in mass ratio, CaO/MgO is in a range of more than 1.5 and up to 10.0 in mass ratio, the source materials are mixed as mixture powder with an average particle size of 1 mm or less, and the forming binder optionally contained sets the mixture powder in a pelletized or lumped form with a size of 3 mm to 40 mm. The invention also provides a refining method of refining molten pig iron by performing a series of treatment, characterized in that the refining method is formed of desulfurization treatment and at least one of desiliconization treatment and dephosphorization treatment, on molten pig iron after tapping from blast furnace and before decarburization in converter, wherein the desulfurization treatment is performed by adding a refining agent of the present invention to the molten pig iron held in a container.

The invention further provides a refining method of refining molten pig iron by performing a series of treatment, characterized in that the refining method is formed of desulfurization treatment and at least one of desiliconization treatment and dephosphorization treatment, on molten pig iron after tapping from blast furnace and before decarburization in converter, wherein the desulfurization treatment is performed by adding a refining agent of the present invention to the molten pig iron held in a container, and wherein a total consumption of fluorite in the series of treatment is set to be 0.1 kg or less per ton of molten pig iron.

According to a first aspect of the present-disclosure, there is provided a refining agent containing Al, MgO, and CaO as main components, and including a material as a MgO source and CaO source, in which MgO and CaO are close to or in contact with each other in a minute state, the refining agent being arranged to produce Mg vapor due to a reaction in molten iron, when the refining agent is supplied into the molten iron.

According to a second aspect of the present-disclosure, there is provided a refining agent containing Al, MgO, and CaO as main components, and including dolomite as a MgO source and CaO source, the refining agent being arranged to produce Mg vapor due to a reaction in molten iron, when the refining agent is supplied into the molten iron.

According to a third aspect of the present-disclosure, there is provided a refining agent containing Al, MgO, and CaO as main components, and including dolomite as a MgO source and CaO source, wherein Al/MgO is 0.05 or more in mass ratio, and CaO/MgO is in a range of 0.5 to 10.0 in mass ratio.

According to a fourth aspect of the present-disclosure, there is provided a refining agent containing Al, C, MgO, and CaO as main components, and arranged to produce Mg vapor due to a reaction in molten iron, when the refining agent is supplied into the molten iron.

According to a fifth aspect of the present disclosure, there is provided a refining agent containing Al, C, MgO, and CaO as main components, wherein Al/MgO is 0.05 or more in mass ratio, C/MgO is 0.1 or more in mass ratio, and CaO/MgO is in a range of 0.5 to 10.0 in mass ratio.

According to a sixth aspect of the present disclosure, there is provided a refining method of performing desulfurization treatment of molten pig iron by adding a refining agent to the molten pig iron held in a container, the refining agent containing Al, MgO, and CaO as main components, and including a material as a MgO source and CaO source, in which MgO and CaO are close to or in contact with each other in a minute state.

According to a seventh aspect of the present-disclosure, there is provided a refining method of performing desulfurization treatment of molten pig iron by adding a refining agent to the molten pig iron held in a container, the refining agent containing Al, MgO, and CaO as main components, and including dolomite as a MgO source and CaO source.

According to an eighth aspect of the present-disclosure, there is provided a refining method of refining molten pig iron by performing a series of treatment, which is formed of desulfurization treatment and at least one of desiliconization treatment and dephosphorization treatment, on molten pig iron after tapping from blast furnace and before decarburization in converter, wherein the desulfurization treatment is performed by adding a refining agent to the molten pig iron held in a container, the refining agent containing Al, MgO, and CaO as main components, and including dolomite as a MgO source and CaO source.

According to a ninth aspect of the present-disclosure, there is provided a refining method of refining molten pig iron by performing a series of treatment, which is formed of desulfurization treatment and at least one of desiliconization treatment and dephosphorization treatment, on molten pig iron after tapping from blast furnace and before decarburization in converter, wherein the desulfurization treatment is performed by adding a refining agent to the molten pig iron held in a container, the refining agent containing Al, MgO, and CaO as main components, and including dolomite as a MgO source and CaO source, and wherein a total consumption of fluorite in the series of treatment is set to be 0.1 kg or less per ton of molten pig iron.

According to a tenth aspect of the present-disclosure, there is provided a refining method of performing at least one of desulfurization treatment, deoxidation treatment, and inclusion control of molten steel by adding a refining agent to the molten steel, the refining agent containing Al, MgO, and CaO as main components, and including dolomite as a MgO source and CaO source.

According to an eleventh aspect of the present-disclosure, there is provided a refining method of performing making high clean molten steel by adding a refining agent to molten steel deoxidated by a predetermined element, the refining agent containing Al, MgO, and CaO as main components, and including dolomite as a MgO source and CaO source.

according to a twelfth aspect of the present-disclosure, there is provided a refining method of performing desulfurization treatment of molten pig iron by adding a refining agent to the molten pig iron held in a container, the refining agent containing Al, C, MgO, and CaO as main components,

According to a thirteenth aspect of the present-disclosure, there is provided a refining method of refining molten pig iron by performing a series of treatment, which is formed of desulfurization treatment and at least one of desiliconization treatment and dephosphorization treatment, on molten pig iron after tapping from blast furnace and before decarburization in converter, wherein the desulfurization treatment is performed by adding a refining agent to the molten pig iron held in a container, the refining agent containing Al, C, MgO, and CaO as main components.

According to a fourteenth aspect of the present-disclosure, there is provided a refining method of refining molten pig iron by performing a series of treatment, which is formed of desulfurization treatment and at least one of desiliconization treatment and dephosphorization treatment, on molten pig iron after tapping from blast furnace and before decarburization in converter, wherein the desulfurization treatment is performed by adding a refining agent to the molten pig iron held in a container, the refining agent containing A, C, MgO, and CaO as main components, and wherein a total consumption of fluorite in the series of treatment is set to be 0.1 kg or less per ton of molten pig iron.

According to a fifteenth aspect of the present-disclosure, there is provided a refining method of performing at least one of desulfurization treatment, deoxidation treatment, and inclusion control of molten steel by adding a refining agent to the molten steel, the refining agent containing Al, C, MgO, and CaO as main components.

According to a sixteenth aspect of the present-disclosure, there is provided a refining method of performing making high clean molten steel by adding a refining agent to molten steel deoxidated by a predetermined element, the refining agent containing Al, C, MgO, and CaO as main components.

According to a seventeenth aspect of the present-disclosure, there is provided a desulfurization slag recycling method of performing desulfurization treatment of molten pig iron by adding a refining agent to the molten pig iron, and then recycling desulfurization slag thus generated as a raw material to be sintered for a blast furnace, the refining agent containing Al, MgO, and CaO as main components, and including dolomite as a MgO source and CaO source.

According to the present invention, since Al, MgO, and CaO are used as main components, the rate of MgO changing into Mg vapor is increased. Since a material, in which MgO and CaO are close to or in contact with each other in a minute state, is used as a MgO source and CaO source, the reactivity is increased. Accordingly, refining of molten iron, using a Mg source, can be performed with an extremely high efficiency. Where dolomite, which is inexpensive, is used as a MgO source and CaO source having a material, in which MgO and CaO are close to or in contact with each other in a minute state, refining of molten iron, using a Mg source, can be performed with an extremely high efficiency and inexpensively.

Where Al, MgO, and CaO are used as main components, while the Al used as a reducing agent is partly replaced with C, which is inexpensive, refining of molten iron can be also performed inexpensively. In this case, where a material having a material, in which MgO and CaO are close to or in contact with each other in a minute state, is used as a MgO source and CaO source, refining of molten iron, using a Mg sources, can be performed with an extremely high efficiency. Where dolomite, which is inexpensive, is used as such a MgO source and CaO source, refining of molten iron, using a Mg source, can be performed with an extremely high efficiency and inexpensively.

A refining agent according to the present invention exerts an excellent refining effect, where it is applied to desulfurization of molten pig iron, or desulfurization or deoxidation of molten steel, and it allows inclusion control after deoxidation of molten steel to reduce the number of product defects.

[Brief Description of Drawings]

FIG. 1 is a view showing existence images of CaO and MgO in dolomite and in a mixture of lime and brucite, to perform a comparison between them;

FIG. 2 is a view showing the relationship between the Al/MgO value of a refining agent and the Mg reduction rate;

FIG. 3 is a view showing the relationship between the Al/MgO value of a refining agent and the desulfurization rate;

FIG. 4 is a view showing the relationship between the CaO/MgO value of a refining agent and the Mg reduction rate;

FIG. 5 is a view showing the relationship between the Al/MgO value of a refining agent and the Mg reduction rate, in the case of containing no C, and in the case of adding C (C/MgO = 0.3 and 1.0);

FIG. 6 is a schematic view showing a state of desulfurizing molten pig iron by a mechanically stirring type desulfurization apparatus, using a refining agent according to the present invention;

FIG. 7 is a schematic view showing a state of desulfurizing molten pig iron by an injection method, using a refining agent according to the present invention;
FIG. 8 is a view showing a state of refining molten steel by an RH vacuum degassing setup, using a refining agent according to the present invention;
FIG. 9 is a view showing a state of molten pig iron desulfurization slag by a mechanically stirring type and a state of creating a new surface, to perform a comparison with molten pig iron desulfurization slag by an injection method;
FIG. 10 is a view showing a treatment pattern for recycling desulfurization slag by a practical machine;
FIG. 11 is a graph showing the relationship between the CaO/MgO ratio and the desulfurization rate in a example 1;
FIG. 12 is a graph showing the relationship between the Al/MgO ratio and the desulfurization rate in the example 1;
FIG. 13 is a graph showing the relationship between the $Q(\alpha_{cao} + \alpha_{MgO}) / W (\alpha_{siO2} + \alpha_{Al2O3})$ value and the desulfurization rate, in the case of setting Al/MgO = 0.45 to be constant, and setting the CaO/MgO value of flux at 0, 0.88, 2, 4.5, and $\infty$, in a example 5; and
FIG. 14 is a graph showing the relationship between the $(CaO + MgO)/(SiO_2 + Al_2O_3)$ value and the desulfurization rate, in the case of setting Al/MgO = 0.45 to be constant, and setting the CaO/MgO value of flux at 0, 0.88, 2 (dolomite), 4.5, and $\infty$, in the example 5.

[Best Mode for Carrying Out the Invention]

Embodiments of the present invention/disclosure will now be described in detail, while dividing them into items.

I. Refining agent

A refining agent according to the present invention is defined in claim 1 and contains Al, MgO, and CaO as main components, and includes a material, in which MgO and CaO are close to or in contact with each other in a minute state, as a MgO source and CaO source. It includes dolomite as a MgO source and CaO source. When the refining agent is supplied into molten iron, it produces Mg vapor due to a reaction in the molten iron, and causes a refining reaction by the Mg vapor.
In the present invention, since CaO is added, Mg vapor is produced in accordance with the following formulas (4) to (7), in place of the formula (3).

$$6MgO + 4Al + CaO \rightarrow 6Mg(g) + CaO \cdot 2Al_2O_3 \qquad (4)$$

$$3MgO + 2Al + CaO \rightarrow 3Mg(g) + CaO \cdot Al_2O_3 \qquad (5)$$

$$21MgO + 14Al + 12CaO \rightarrow 21Mg(g) + 12CaO \cdot 7Al_2O_3 \qquad (6)$$

$$3MgO + 2Al + 3CaO \rightarrow 3Mg(g) + 3CaO \cdot Al_2O_3 \qquad (7)$$

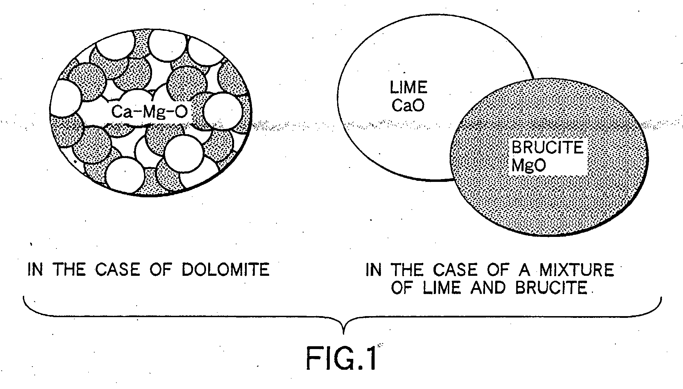

In the formula (3), MgO in the starting substance is partly consumed in producing $MgO \cdot Al_2O_3$, and thus the ratio of MgO changing into Mg vapor is suppressed to 75% at most. On the other hand, in the formulas (4) to (7), in place of MgO, CaO produces a complex oxide in cooperation with $Al_2O_3$, and thus the efficiency of MgO changing into Mg vapor is high. Theoretically, all the MgO can change into Mg vapor, thereby further improving the cost efficiency
In order to allow the reaction set out in the formulas (4) to (7) to effectively proceed, it is important MgO and CaO are close to or in contact with each other in the minute state. Accordingly, a material in which MgO and CaO are close to or in contact with each other in a minute state is used as a CaO source and MgO source. Dolomite is preferably used as such a CaO source and MgO source. FIG. 1 is a view showing existence images of CaO and MgO in the case of using dolomite (see the left side) and in the case of mixing lime used as a CaO source and brucite used as a MgO source (see the right side), to perform a comparison between them. Since dolomite is a solid solution of CaO and MgO, MgO and CaO always coexist in any fine powder state, thereby providing a mixed state remarkably minute, as compared to the right side case where MgO particles and CaO particles are mechanically mixed. Accordingly, dolomite is very effective to provide a form in which MgO and CaO are close to or in contact with each other in a minute state.
In addition, where dolomite is used as a CaO source and MgO source, CaO in the dolomite also sufficiently contributes to a refining reaction, especially to a desulfurization reaction, so that the refining can be performed with a very high efficiency. Dolomite is less expensive than conventional MgO sources, and thus the raw material itself becomes inexpensive. As a result, molten iron refining, using a Mg source, can be performed with a high efficiency and inexpensively.
Dolomite used as a CaO source and MgO source in the present disclosure is defined by a concept including any of raw dolomite (dolomite as a mineral), burnt dolomite obtained by burning raw dolomite, and a mixture of them. Particularly, light-burnt dolomite (obtained by heating and burning raw dolomite at a temperature of 1,000 to 1,300°C), which is very reactive, is used as the dolomite in the present invention. Specifically, light-burnt dolomite has a large specific surface area and large porosity, and is active. In addition, it contains CaO and MgO uniformly mixed in a micro-structure. Accordingly, light-burnt dolomite remarkably increases the rate of the reaction set out in the formulas (4) to (7), thereby greatly improving the desulfurization rate, as compared to a case where CaO particles and MgO particles are mechanically mixed.

Mineral dolomite has a theoretical composition of $CaMg(CO_3)_2$, but greatly varies in CaO and MgO contents depending on the producing district, with a CaO/MgO mass ratio falling in a range of about 1 to 2. Dolomite decomposes and emits $CO_2$ in air or $CO_2$ by the following two steps, and, when being heated more, it becomes a solid solution of CaO and MgO.

$$CaMg(CO_3)_2 \rightarrow CaCO_3 + MgO + CO_2 \ (730 \ to \ 810°C)$$

$$CaCO_3 \rightarrow CaO + CO_2 \ (890 \ to \ 930°C)$$

For example, dolomite produced from Tochigi Prefecture, Japan, approximately contains 63 to 66 mass% CaO and 30 to 35 mass% MgO, after being burnt.

A material containing 25 mass% or more metal Al is used as an Al source functioning as a reducing agent. The Al purity is preferably higher, because the quantity of effective components becomes larger in flux. An A1 purity of 25 mass% suffices refining functions, such as desulfurization, without a hindrance. Aluminum dross is preferably used as such an Al source, because it is inexpensively available. As a matter of course, another Al source, such as atomized powder obtained by atomizing molten aluminum liquid with gas, or powder from cutting, which is generated by grinding and cutting an aluminum alloy, may be used.

The MgO source and CaO source may include a MgO source and CaO source other than dolomite. Where MgO and CaO are to be contained at the same ratio as in dolomite, a raw material other than dolomite and an Al source does not have to exist. In order to further increase the MgO ratio, another MgO source is combined to adjust the composition. As another MgO source, brucite or magnesite is preferably used in light of the price, but seawater MgO can be used. In order to further increase the CaO ratio from the dolomite composition, another CaO source is combined to adjust the composition. As another CaO source, lime, calcium carbonate or calcium hydroxide may be used.

The particle size of these raw materials is an important factor, which dominates the reactivity. In order to produce Mg vapor at a high reaction rate, it is preferable that the primary particles of 1 mm or less of each raw material form a powdered refining agent. Furthermore, in order to efficiently perform a refining operation in molten iron, such powdered body having primary particles of 1 mm or less may be formed into a pelletized or lumped form sized to be 3 to 40 mm. In this case, dry forming is preferably used. It is necessary, however, for the pelletized and lumped forms to readily break down in molten iron so that the area of a reaction surface is ensured.

In a refining agent according to this embodiment, it is preferable that Al/MgO is 0.05 or more in mass ratio, and CaO/MgO is in a range of 0.5 to 10.0 in mass ratio.

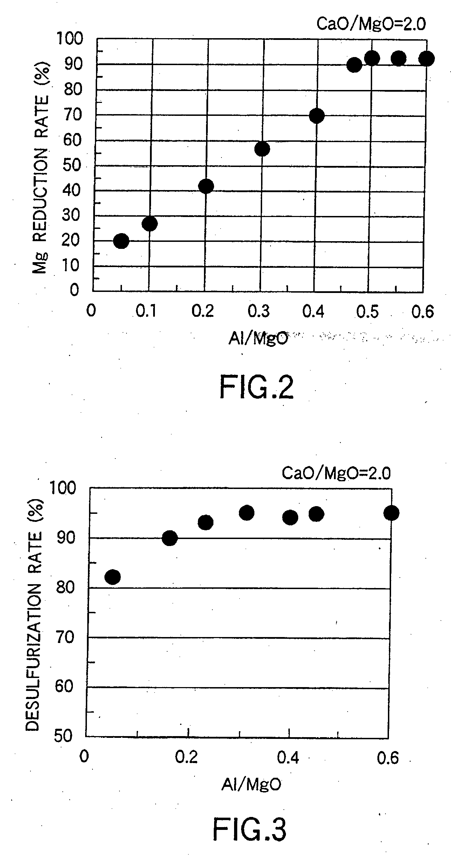

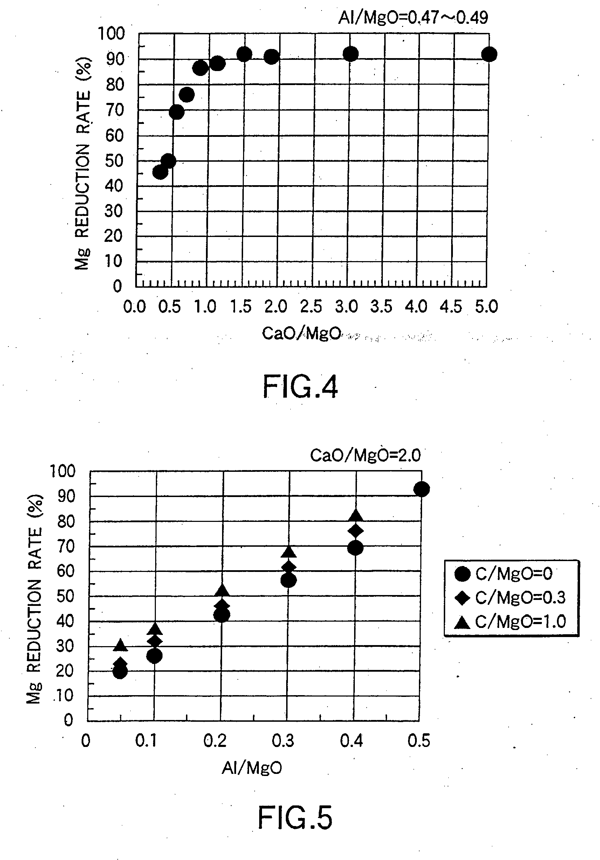

The reasons for this will be explained with reference to FIGS. 2 to 4. FIG. 2 is a view showing the relationship between the Al/MgO value, which is on the horizontal axis, of a refining agent, and the Mg reduction rate, which is on the vertical axis. FIG. 3 is a view showing the relationship between the Al/MgO value, which is on the horizontal axis, of a refining agent, and the desulfurization rate, which is on the vertical axis, obtained by actually performing desulfurization treatment. FIG. 4 is a view showing the relationship between the CaO/MgO value, which is on the horizontal axis, of a refining agent, and the Mg reduction rate, which is on the vertical axis. These results were obtained by using a temperature range of 1,300 to 1,400°C. The Mg reduction rate was defined as follows:

$$\texttt{Mg reduction rate = (MgO quantity reduced to}$$
$$\texttt{Mg)/(the whole MgO quantity in a refining agent)}$$

As shown in FIG. 2, where the Al/MgO mass ratio is 0.05, the Mg reduction rate is about 20%. As shown in FIG. 3, even in such a case, the desulfurization rate obtained is more than 80%. Accordingly, the Al/MgO mass ratio is preferably 0.05 or more. Where the Al/MgO is 0.2 or more, the Mg reduction rate is 40% or more, and the desulfurization rate is more that 90%, which is a high level, and thus this is more preferable. The upper limit of the Al/MgO does not specifically exist. In this respect, the Al source is most expensive in the raw materials, and the effect is saturated where the Al/MgO is more than 0.6. Accordingly, in light of the cost efficiency, the Al/MgO is preferably set at 0.6 or less.

As clearly shown in FIG. 4, where the CaO/MgO is 0.5 or more, the Mg reduction rate abruptly increases. On the other hand, where the CaO/MgO is 1.1. or more, the Mg reduction rate does not increase any more. However, since CaO itself has a desulfurization function, a desulfurization reaction is effectively caused until the CaO/MgO is 10.0. Accordingly, the CaO/MgO is preferably in a range of 0.5 to 10. Where the CaO/MgO is 0.75 or more, about 90% or more of Mg changes into Mg vapor without producing $MgO \cdot Al_2O_3$, and thus it is preferable.

Where the CaO/MgO is more than 1.5 and up to 10, dolomite can be used as a Mg source at a high rate, and thus the amount of the other MgO sources to be used can be reduced, thereby being economical. Particularly, where the CaO/MgO is in the dolomite composition range, essentially only dolomite is used as a CaO source and MgO source. In this case, the Mg gas generation efficiency can be increased to the maximum and is remarkably economical. Where the CaO/MgO is larger than the dolomite composition range, lime or the like is added as a CaO source. In this case, since the price of lime or the like used as a CaO source is not more than that of dolomite, and thus it is economical. However, where the CaO/MgO is more than 10, the CaO ratio is too high and the effect of dolomite is reduced.

In this embodiment, it is preferable that the sum of MgO, CaO, and Al is set at 75 mass% or more in a refining agent. Where it is less than 75 mass%, components effective in the refining function are reduced, and thus it is uneconomical and brings about a low reaction rate.

In order to change raw materials into a pelletized form or lumped form, a binder is preferably used. Where a binder is used, a non-water-based binder is used, because a MgO source, such as light-burnt dolomite or brucite, is active to water, and does not allow a water-based binder to be used. A binder used preferably has a fixed carbon content of 30 to 40 mass%, and has a viscosity of 2 to 10 poise at 60°C. Where such a binder is combined at 1 to 4 mass% of the whole raw material powder, a formed body having a sufficient strength can be obtained. Where the viscosity of a binder exceeds 10 poise, it is difficult to obtain a uniformly kneaded state of the binder and raw material powder. Where the viscosity of a binder is less than 2 poise, the formation strength decreases, and the formed body tends to easily change into powder upon handling in transfer after forming.

A refining agent according to an embodiment of the present disclosure contains Al, C, MgO, and CaO as main components. When the refining agent is supplied into molten iron, it produces Mg vapor and a complex oxide of CaO and $Al_2O_3$ due to a reaction in the molten iron, and causes a refining reaction by the Mg vapor.

In the embodiment described above, although Al is used as a reducing agent, Al is relatively expensive. Accordingly, in this embodiment, Al and C are used together as a reducing agent, so that the Al quality is reduced to make flux inexpensive.

FIG. 5 is a view showing the relationship between the Al/MgO value, which is on the horizontal axis, of a refining agent, and the Mg reduction rate, which is on the vertical axis, in the case of containing no C, and in the case of adding C (C/MgO = 0.3 and 1.0). This result was obtained by adding a refining agent to molten iron at a temperature of 1,300 or more, with CaO/MgO = 2.0.

As is understood from FIG. 5, the Mg reduction rate slightly increases, as C is added and C increases. It is thus drawn that C is effective as a reducing agent.

In this embodiment, the MgO source and CaO source are not limited to a specific one. However, as in the first embodiment, it is preferable to use a material as a MgO source and CaO source, in which MgO and CaO are close to or in contact with each other in a minute state. Dolomite is preferably used such a CaO source and MgO source.

Also in this embodiment, a material containing 25 mass% or more metal Al, such as aluminum dross powder, is used as an Al source functioning as a reducing agent. Graphite powder, coke powder, fine powder coal, or the like may be used as a C source.

Also in this embodiment, in order to increase the Mg reduction rate, and improve the reaction efficiency of a refining reaction, primary particles of each raw material preferably form a powdered refining agent of 1 mm or less. Furthermore, in order to efficiently perform a refining operation in molten iron, such, powdered body having primary particles of 1 mm or less may be formed into a pelletized or lumped form sized to be 3 to 40 mm. It is necessary, however, for the pelletized or lumped forms to readily break down in molten iron so that the area of a reaction surface is ensured.

In refining flux according to this embodiment, it is preferable that Al/MgO is 0.05 or more in mass ratio, C/MgO is in a range of 0.1 or more in mass ratio, and CaO/MgO is in a range of 0.5 to 10.0 in mass ratio. Where the Al/MgO is 0.05 or more, Mg vapor is generated to some extent by the reduction action of Al, thereby allowing the refining reaction to effectively proceed, as described above. Where the C/MgO mass ratio is less than 0.1, the effect of C is not effectively exerted. As in the embodiment described above, where the CaO/MgO is 0.05 or more, the Mg reduction rate abruptly increases. Since CaO itself has a desulfurization function, a desulfurization reaction is effectively caused until the CaO/MgO is 10.0.

Also as in the embodiment described above, where the CaO/MgO is 0.75 or more, about 90% or more of Mg changes into Mg vapor without producing $MgO \cdot Al_2O_3$, and thus it is preferable. Also as in the embodiment described above, where the CaO/MgO is more than 1.5 and up to 10, dolomite can be used as a Mg source at a high rate, and thus the amount of the other MgO sources to be used can be reduced, thereby being economical.

Particularly, where the CaO/MgO is in the dolomite composition range, essentially only dolomite is used as a CaO source and MgO source. In this case, the Mg gas generation efficiency can be increased to the maximum and is remarkably economical. Where the CaO/MgO is larger than the dolomite composition range, lime or the like is added as a CaO source. In this case, since the price of lime or the like used as a CaO source is not more than that of dolomite, and thus it is economical.

In this embodiment, it is preferable that the sum of MgO, CaO, Al, and C is set at 75 mass% or more in a refining agent. Where it is less than 75 mass%, components effective in the refining function are reduced, and thus it is uneconomical and brings about a low reaction rate.

A refining agent according to the present invention can be applied to any molten iron, such as molten pig iron, molten steel, or cast pig iron, and can be applied to deoxidation as well as desulfurization. Specifically, although a refining agent according to the present invention is effective as a desulfurization agent especially for molten pig iron, it also exerts a desulfurization effect for molten steel or molten pig iron for castings, and further exerts an effect as a deoxidation agent for molten steel. In addition, desulfurization and deoxidation can be performed at the same time.

A refining agent according to any one of the embodiments described above of the present invention allows desulfurization of molten pig iron to be performed without using a F-containing substance, such as fluorite. Conventionally, such a substance is essentially used as slag formation flux, when a refining agent is used as a desulfurization agent. Accordingly, where selected dolomite, an Al source, another CaO source, and another MgO source, which are raw materials, essentially contain no F, it is possible to provide a refining agent containing substantially no F in itself. As a result, the F content of slag very low after desulfurization treatment, thereby preventing ill effects on the environment. Some of Al sources inevitably contain F. Even where such an Al source is used, its quantity can be regulated, so that the F content of slag is 0.1 mass% or less after desulfurization treatment, thereby preventing ill effects on the environment. Although it depends on conditions, such as the Al source addition quantity, desulfurization agent charge quantity, and other slag mixed therein, the F content in an Al source is preferably set at 0.15 mass% or less, to allow the F content of slag to be 0.1 mass% or less after desulfurization treatment,

II. Refining method

Next, an explanation will be given of a refining method, using a refining agent according to the present invention.

(1) Desulfurization of molten pig iron

Where a refining agent according to the present invention can be applied to desulfurization treatment of molten pig iron, the refining agent is added to molten pig iron held in a container, such as a ladle, a torpedo car, or a runner in a cast house, so that desulfurization treatment for the molten pig iron is performed. In the desulfurization of molten pig iron, using the refining agent, the components or the like of the molten pig iron are not limited to specific ones. It may be applied to any molten pig iron, e.g., to low Si pig iron with no problem. A method of adding the refining agent to cause the desulfurization reaction is also not limited to a specific one. It is possible to adopt one of various types of methods, such as a method of charging a refining agent from directly above molten pig iron, and mechanically stirring it by, e.g., an impeller; a method of injecting a refining agent into molten pig iron; a method of placing a refining agent on molten pig iron; a putting-in method of putting a refining agent in a container in advance, and then introducing molten pig iron into the container; and a method of adding a refining agent to molten pig iron in a runner in a cast house. Among these methods, the mechanically stirring method or the injection method is preferably used.

In relation to the grain size of the refining agent, any of lumped, pelletized, and powdered forms, and any of grain sizes can be used, but an optimum shape and grain size may be selected, depending on then container, process, or desulfurization method to be used. For example, where a large amount of refining agent is added from directly above molten pig iron ïn the mechanically stirring method or the like, it is preferable to use the refining agent with a size almost not smaller than the grain size that is optimum in operation or economy, so that yield loss due to scattering or the like is reduced. On the other had, where the refining agent is used in the injection method, it should be powdered at a level to prevent nozzle clogging. In any case, the particle size of the refining agent is an important factor, which dominates the reactivity. As described above, it is preferable that the primary particles of each raw material form a powdered refining agent of 1 mm or less. Furthermore, in order to efficiently perform a refining operation in molten iron, such powdered body having primary particles may be formed into a pelletized or lumped form sized to have a diameter of about 3 to 40 mm, depending on the container, process, or desulfurization method to be used. It is necessary, however, for the pelletized or lumped forms to readily break down in molten iron so that the area of a reaction surface is ensured.

Where a refining agent according to the present invention is added to molten pig iron, dolomite and an Al source, and another CaO source and/or another MgO source, which are added as the need arises, may be added as a mixture formed by mixing them all together in advance, or may be added without mixing them in advance. This is so in any of the preferable methods described above, i.e., the mechanically stirring method and injection method, and in any of other methods, e.g., the putting-on method and putting-in method.

Where the raw materials are not mixed in advance, the addition position and addition timing of each raw material can be variously adjusted. Specifically, the raw materials may be added at the same position or at different positions. The raw materials may be added at the same time or at different times. In any case, the raw materials are added together or separately at several times. The same or different addition positions and addition timing of the raw materials can be combined in a large number of addition patterns.

Such a large number of addition patterns can be realized by, e.g., (i) an addition setup including a plurality of raw material hoppers for independently storing respective raw materials, and a mechanism for independently performing taking-out or injection of the respective raw materials from the raw material hoppers into molten pig iron in a container; (ii) an addition setup including a plurality of raw material hoppers for independently storing respective raw materials, an intermediate hopper for temporarily storing the raw materials supplied from the plurality of raw material hoppers at arbitrary quantities, and a mechanism for performing taking-out or injection of the raw materials from the intermediate hopper into molten pig iron in a container; or (iii) an addition setup including a plurality of hoppers for independently storing respective raw materials, an intermediate hopper for temporarily storing the raw materials supplied from the hoppers at arbitrary quantities, a mixing apparatus for mixing the raw materials stored in the intermediate hopper, and a mechanism for performing taking-out or injection of the raw materials from the intermediate hopper into molten pig iron in a container.

In the case of using the addition setup (i), the addition times of the raw materials may be set the same in part or in all, or may be set different from each other, while the addition positions of the raw materials are set different from each other. In this case, the addition positions of the raw materials may be set the same by adjusting the orientations of the raw material addition ports. In the case of using the addition setup (ii), the addition times of the raw materials may be set the same in part or in all, or may be set different from each other, while the addition positions of the raw materials are set the same. In the case of using the addition setup (iii), the addition times of the raw materials can be set the same, while the addition positions of the raw materials are set the same.

As described above, a concrete example of adding a refining agent in a non-mixed state according to the present invention to molten pig iron may be made such that an Al source in part or in all is added to molten steel separately from the other raw materials, using the addition setup (i) or (ii). In this case, the Al source may be added to molten pig iron before or after, or both of before and after dolomite or the like is added. Furthermore, the Al source may be added while dolomite or the like is added. For example, a recipe may be made such that a part of the Al source is first added to the molten pig iron, and then the rest of the Al source is added at a time or over several times while or after dolomite or the like is added.

Where raw materials are mixed in advance, a method may be adopted such that the mixed raw materials are stored in one hopper, and then added to molten pig iron in a container at a time or over several times. This method has a merit in that the number of hoppers can be small. Pre-mixing of raw materials and non-mixing of raw materials may be used together. In this case, an addition setup having a hopper, which stores the raw materials mixed in advance, and the addition setup (i), (ii), or (iii) may be used together.

A refining agent according to the present invention can be added by various kinds of addition setups, from which an appropriate setup is selected in accordance with the addition pattern.

In desulfurization treatment using a refining agent according to the present invention, since the molten pig iron temperature greatly influences Mg gas generation from MgO, the molten pig iron temperature, before the treatment, is important. In order to effectively generate Mg gas by the reaction set out in the formula (6), the temperature is preferably 1,300°C or more in view of thermodynamics. However, where the temperature is 1,300°C or less, the reaction set out in the formula (6) actually proceeds. In practice, even where the temperature is 1,200°C or more, the reaction can proceed. Accordingly, before the desulfurization treatment, the molten pig iron temperature is set at 1,200°C or more, and preferably at 1,300°C or more.

When the necessary charge quantity of a used refining agent according to the present invention is determined in desulfurization treatment, the following matters should be considered. As a matter of course, if the addition quantity is short, the necessary desulfurization quantity cannot be obtained. If the charge is excessive, ill effects are brought about such that the treatment time is prolonged, the molten pig iron temperature is lowered, and the generated slag quantity increases. It is necessary, therefore, to add a refining agent at an optimum quantity relative to a required desulfurization quantity.

In a refining agent according to the present-disclosure, a material, typically dolomite, having a material in which MgO and CaO are close to or in contact with each other in a minute state, is used as a MgO source and CaO source. Furthermore, another MgO source and CaO source are used, as the need arises. These materials contribute to desulfurization conceivably in terms of the following three items, It should be noted as an important point, that MgO in dolomite and MgO in a further added MgO source differ from each other in both of the Mg gas generation quantity and desulfurization efficiency, and thus they need to be separately considered.

(i) Desulfurization by Mg gas and Mg generated from MgO in dolomite.
(ii) Desulfurization by Mg gas and Mg generated from MgO in a further added MgO source.
(iii) Desulfurization by CaO.

Influential factors of each of them will be discussed.

In the following formula (8) to (11), symbols stand for the following matters: $W1_{MgO}$ for MgO unit requirement (kg/t) in dolomite; $W2_{MgO}$ for MgO unit requirement (kg/t) in other MgO source than dolomite; $W_{CaO}$ for CaO unit requirement (kg/t); $W_{Al}$ for added Al unit requirement (kg/t); T for molten pig iron temperature (°C) before treatment; [S]i for S concentration (%) before treatment; $\omega$ for stirring power (W/t); c for Al contribution rate to MgO reduction; $\alpha_1 \cdot \alpha_2$ for desulfurization efficiency (reaction efficiency with S in molten pig iron) of Mg gas and Mg dissolved in molten pig iron, generated from MgO; $\beta_1 \cdot \beta_2$ for generation rate of Mg gas and dissolved Mg, from MgO; $\gamma$ for desulfurization efficiency (reaction efficiency with S in molten pig iron) of CaO; and $\Delta$S for.required desulfurization quantity (kg/t).

Re (i):

The generation rate $\beta$ of generating Mg gas and dissolved Mg from MgO will be considered. This is greatly influenced by the molten pig iron temperature and Al addition quantity. The Al contribution rate c to MgO reduction also needs to be considered. The contribution rate c depends on a method of crushing a refining agent. For example, where a mixing and crushing manner of crushing aluminum dross and dolomite while mixing them is adopted, the contact probability is higher, thereby increasing the contribution rate.

On the other hand, where aluminum dross and dolomite are separately charged, the contact probability is lower, thereby reducing the contribution rate c. The contribution rate c is also influenced by the oxygen concentration in molten pig iron before the treatment. Where the oxygen concentration is high, the Al quantity contributing to deoxidation increases, thereby relatively reducing the contribution rate c to MgO reduction. Furthermore, the efficiency $\alpha$ at which generated Mg gas and Mg react with S in molten pig iron will be considered. It is thought that the $\alpha$ depends on the S concentration in molten pig iron and stirring power . The degree of dependence on the stirring power varies depending on the treatment method or the form of a setup, and thus it is a coefficient empirically obtained in practical use. For example, as the S concentration before the treatment or stirring power increases, the $\alpha$ increases. In consideration of all these factors, desulfurization quantity $\Delta S_1$ (kg/t) by Mg gas and dissolved Mg generated from MgO in dolomite is expressed by the following formula (8).

$$\Delta S_1 = \{W1_{MgO} \times \alpha_1 \times \beta_1 \times 32/40\} \qquad (8)$$

where

$$\alpha_1 = f([S]i, \omega), \quad \beta_1 = f(T, c, W_{Al})$$

Re (ii):

As in (i) described above, the same influential factors need to be considered. In this case, since MgO in dolomite and MgO in other MgO source than dolomite differ from each other in both of the Mg gas generation quantity and desulfurization efficiency even under the same conditions, the $\alpha$ and $\beta$ need to be separately set. Where the Mg gas generation rate and desulfurization efficiency in other MgO source than dolomite are $\beta_2$ and $\alpha_2$, respectively, desulfurization quantity $\Delta S_2$ by Mg gas and dissolved Mg generated from MgO in other MgO source than dolomite is expressed by the following formula (9). If only dolomite is used, this term is negligible.

$$\Delta S_2 = \{W2_{MgO} \times \alpha_2 \times \beta_2 \times 32/40\} \qquad (9)$$

Re (iii):

The reaction efficiency T of CaO with S in molten pig iron will be considered. Ii is thought that this efficiency depends on the S concentration in molten pig iron, molten pig iron temperature, and stirring power. As in the $\alpha$, the degree of dependence on the stirring power varies depending on the treatment method or the form of a setup, and thus it is a coefficient empirically obtained from actual results in, e.g., the case of using a lime-based desulfurization agent. As the S concentration before the treatment, molten pig iron temperature before the treatment, or stirring power increases, the $\gamma$ increases. In consideration of these factors, desulfurization quantity $\Delta S_3$ by CaO is expressed by the following formula (10).

$$\Delta S_3 = \{W_{CaO} + \gamma \times 32/56\} \qquad (10)$$

where

$$\gamma = f(T, [S]i, \omega)$$

In consideration of (i) to (iii) described above, the relationship between the charge unit requirement of a refining agent and the desulfurization quantity $\Delta S$ can be obtained.

Accordingly, where a refining agent according to the present invention is used to perform desulfurization, the refining agent according to the present invention is added at a value not less than the quantity obtained by the following formula (11) in accordance with the desulfurization quantity $\Delta S$ (kg/t). As a result, the refining agent is added at an optimum quantity relative to the desulfurization quantity to perform the desulfurization treatment.

$$\Delta S = \{W1_{MgO} \times \alpha_1 \times \beta_1 \times 32/40\} + \{W2_{MgO} \times \alpha_2 \times \beta_2 \times 32/40\} + \{W_{CaO} + \gamma \times 32/56\} \cdot \qquad (11)$$

Where the mechanically stirring method is used, the desulfurization efficiencies $\alpha_1$, $\alpha_2$, and $\gamma$ can be increased in the formula (11), and thus the desulfurization agent can exert the effects most effectively.

As the molten pig iron temperature before the treatment, 1,200°C or more is enough, as described above, but it is preferably 1,300°C or more in view of thermodynamics. As the temperature is higher, the generation rates $\beta_1$ and $\beta_2$ of Mg gas and dissolved Mg from MgO are increased. With a change in the molten pig iron temperature, the desulfurization efficiency of a refining agent according to the present invention changes, but the necessary refining agent quantity can be appropriately obtained from the formula (11).

Furthermore, in relation to a method of adding the refining agent, there is a case where it is effective that aluminum dross or metal Al and lime used as an Al source is added separately from the refining agent, depending on the oxygen concentration in molten pig iron or the presence and absence of slag on molten pig iron before the treatment. However, in consideration of the formula (11), it is preferable to use a method of mixing an Al source with a MgO source and CaO source including dolomite while crushing them (mixing and crushing), and then adding them, in order to increase the contact efficiency of the Al source with dolomite, and to increase the Al contribution rate c to MgO reduction.

Desulfurization treatment using the formula (11) is not limited to a specific operation method, but may be applied to any of desulfurization operation methods, such as the mechanically stirring method, the injection method, the putting-on method, and the putting-in method.

In general, desulfurization treatment is usually performed after desiliconization treatment or dephosphorization treatment, and thus there is a case where, due to $SiO_2$ and $Al_2O_3$ in slag carried from the process before the desulfurization treatment, the desulfurization function of the slag is lowered. Consequently, depending on the slag composition, the reaction set out in the formulas (4) to (7) does not efficiently proceed, thereby hardly attaining a predetermined desulfurization efficiency. It is important, therefore, to appropriately control the composition of desulfurization slag, and to ensure the desulfurization function of the slag. For this reason, it is effective to grasp the composition of a refining agent to be charged, and the composition of slag carried from a process before the desulfurization treatment, and to control the slag quantity before the desulfurization treatment and the refining agent charge quantity, so that the desulfurization slag has an appropriate composition range. Specifically, where the slag quantity is W (kg/t) before the treatment, the charged refining agent quantity is Q (kg/t), and the composition ratio of a substance $i$ is $\alpha i$, it is effective for the slag quantity before the desulfurization treatment, and the refining agent charge quantity to satisfy the following formula (12).

$$Q(\alpha_{CaO} + \alpha_{MgO})/W(\alpha_{SiO2} + \alpha_{Al2O3}) \geqq 4 \qquad (12)$$

Furthermore, it is preferable to satisfy the following formula (13), for the composition of desulfurization slag in desulfurization treatment, formed by charging a refining agent according to the present invention.

$$(CaO + MgO)/(SiO_2 + Al_2O_3) \geqq 3 \qquad (13)$$

As a consequence, the desulfurization slag comes to have a appropriate composition range, so that the reaction set out in the formulas (4) to (7) is effectively caused, thereby obtaining a high desulfurization efficiency.

Next, a concrete explanation will be given about an preferable example of a method of desulfurizing molten pig iron, using a refining agent according to the present invention, as described above.

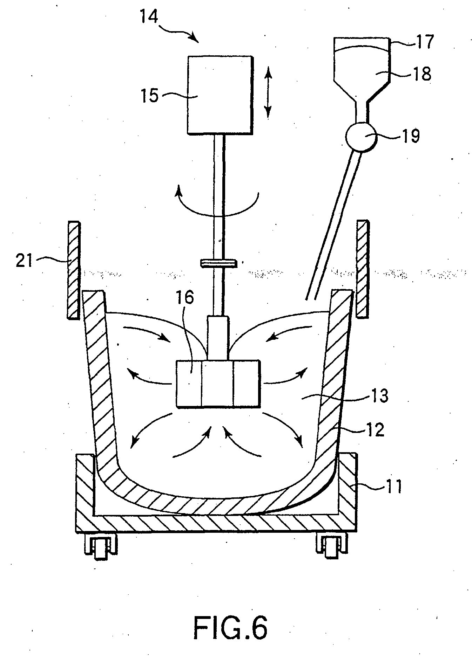

Molten pig iron desulfurization will be first explained in a case where a refining agent according to the present invention is used in a mechanically stirring type desulfurization setup. FIG. 6 is a schematic view showing a state of desulfurizing molten pig iron by such a mechanically stirring type desulfurization apparatus.

Molten pig iron 13 is stored in a molten pig iron ladle 12 supported on a cart 11. The molten pig iron ladle 12 is placed such that a set of blades (impeller) 16 made of a refractory and mounted in an impeller stirring type desulfurization apparatus 14 is positioned at a predetermined position. The impeller stirring type desulfurization apparatus 14 includes, in addition to the impeller 16, a hydraulic motor 15 for rotating the impeller, a weighing hopper 17, a rotary feeder 19 for taking out a refining agent 18 stored in the hopper 17. A dust-collecting hood 21 is equipped to perform dust-collecting, and is moved down and used when the treatment is performed. Weighing hoppers and charge ports for miscellaneous materials, other than those for the refining agent, are also disposed, although they are not shown.

In the impeller stirring type desulfurization apparatus, the impeller 16 is moved down and immersed into the molten pig iron. Upon the immersion, the hydraulic motor 15 is driven to rotate the impeller 16, and to gradually increase the number of revolutions. At the same time, an exhaust device is operated to suck generated dust. When the number of revolutions of the impeller 16 rises to a predetermined steady number of revolutions, the rotary feeder is driven to supply a predetermined amount of desulfurization agent to the molten pig iron.

At this time, the shape of the refining agent may be any one of lumped, pelletized, and powdered forms, with any grain size. Where the refining agent used is powdered, it should not be too fine so as to prevent scattering loss during addition. On the other hand, the refining agent is lumped or pelletized, it preferably has strength such that it does not break down during transportation or charge, but breaks down in the molten pig iron. Where it does not break down in the molten pig iron, the reaction surface is reduced and brings about an undesirable low reactivity. Furthermore, as the case may be, it is effective to further add aluminum dross and metal Al from miscellaneous materials charge ports before the refining agent is added, depending on the presence and absence of slag or quantity of slag on the molten pig iron in the molten pig iron ladle before the desulfurization treatment, or the oxygen concentration in the molten pig iron.

After supply of the refining agent is finished and stirring for a predetermined time is finished, the impeller 16 is moved up while the number of revolutions of the impeller 16 is reduced. When slag rises up to cover the surface of the molten pig iron, and becomes stationary, the desulfurization treatment of the molten pig iron is completed.

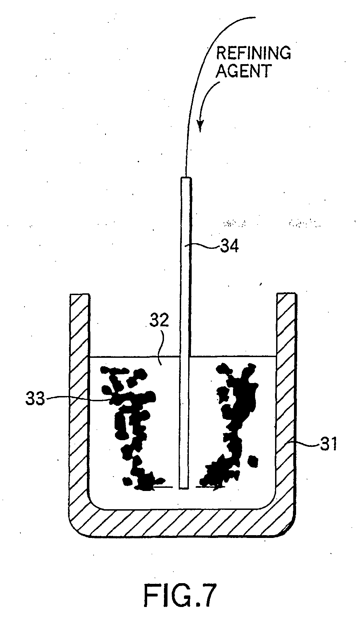

Next, molten pig iron desulfurization will be explained in the case of using a refining agent according to the present invention in the injection method of the present disclosure. FIG. 7 is a schematic view showing a state of desulfurizing molten pig iron by the injection method of the present disclosure, using a refining agent according to the present invention.

Molten pig iron 32 is stored in a container 31, and a lance 34 for injection is vertically inserted in the molten pig iron 32. A refining agent 33 according to the present invention is injected along with an inert gas, such as argon gas or nitrogen gas, into a deep portion of the molten pig iron 32, through the lance 34, using a dispenser, which is not shown, With this operation, a desulfurization reaction is caused while the refining agent 33 goes up to the molten metal surface and is present on the molten metal surface, so that the desulfurization reaction of the molten pig iron 32 proceeds. As the container 31, a ladle or torpedo car may be used.

Where injection is adopted, the refining agent preferably has pelletized or powdered body, and needs to be powdered with a grain size to prevent nozzle clogging. Furthermore, as the case may be, it is effective to effective to further add aluminum dross and metal Al to the molten pig iron 32 in the container 31 in advance, depending on the presence and absence of slag or quantity of slag on the molten pig iron in the ladle before the desulfurization treatment, or the oxygen concentration in the molten pig iron. After an Al source is added, bubbling may be performed by an inert gas, such as argon gas or nitrogen gas, for a short time, so that the added Al source is dissolved in the molten pig iron. The Al source may be put in the container before the molten pig iron is introduced.

After injection of a predetermined amount of the refining agent is finished, the refining agent stops being blown in, and the lance is moved up. When slag rises up to cover the surface of the molten pig iron, and becomes stationary, the desulfurization treatment of the molten pig iron is completed.

Desulfurization treatment of molten pig iron, using a refining agent according to the present invention has three steps of (i) effectively generating Mg vapor from a refining agent, (ii) causing the Mg vapor to react with sulfur in molten pig iron to fix the sulfur content, and (iii) also fixing the sulfur content by a CaO content added at the same time. In order to efficiently perform these steps, it is necessary to control the shape, grain size, adding method, and addition rate of the refining agent, as well as the composition of the refining agent, depending on the container, desulfurization method, or state of the molten pig iron, so as to select optimum conditions to the case.

(2) Series of molten pig iron treatment including desulfurization

Molten pig iron treatment is performed to increase the purity of molten pig iron or molten steel obtained by decarburizing molten pig iron, or to minimize the consumption of a refining agent or energy for providing molten steel with a specific quality. For this reason, in molten pig iron treatment in recent years, not only molten pig iron desulfurization as described above is performed, but also molten pig iron dephosphorization treatment is performed at the same time, in general. Furthermore, in order to efficiently perform dephosphorization treatment, it has been proposed and is applied to a practical machine to perform desiliconization in advance. In other words, desulfurization treatment as described above is performed along with desiliconization treatment and/or dephosphorization treatment as a part of molten pig iron treatment, which is performed in a series, between tapping from a blast furnace and decarburization.

However, desiliconization treatment or dephosphorization treatment greatly differs from desulfurization treatment, in that the former is "oxidation refining" entailing oxygen feed or addition of a solid oxidation agent, while the latter is "reduction refining" in which the efficiency can be increased with an increase in the reduction ability.

Since molten pig iron desulfurization promotes a sulfide production reaction involving reduction of a refining agent, such as CaO, to efficiently remove sulfur in molten pig iron, it is important to control the oxidation level of the molten pig iron, which influences the reduction reaction. Where desulfurization treatment is performed for molten pig iron with an increased oxidation level after desiliconization treatment or dephosphorization treatment, it is difficult to perform the desulfurization with a high efficiency because the consumption of a refining agent or reducing agent is increased, or the treatment time is prolonged. In order to increase the desulfurization efficiency under such a situation, it is important to use a process, which is hardly affected by the desiliconization treatment or dephosphorization treatment, or to control the oxidation level after the treatment.

In general, desulfurization treatment can be performed either before or after desiliconization treatment or dephosphorization treatment, and can be appropriately placed, depending on the temperature conditions suitable for each treatment, steel type to be manufactured, setup positioning, or distribution.

In recent years, in view of the pursuit of efficiency and environmental measures, it is required to reduce refining agents and slag generation quantity. As a result, there is a case where desiliconization or the like is performed immediately after tapping from blast furnace, or desiliconization or dephosphorization is further performed in a transportation container. In other words, part of them is performed as a pre-step of desulfurization in many cases. Desiliconization treatment or dephosphorization treatment employs an oxidation agent, such as gas oxygen or a solid oxidation source, and its reaction is hardly performed together with a desulfurization reaction with a high efficiency. Accordingly, in general, it is performed to (i) exchange refining containers, (ii) temporarily exhaust slag before the desulfurization treatment, i.e., slag after the desiliconization or dephosphorization treatment, and (iii) reduce the oxidation level of molten pig iron in a pre-process.

In relation to the object described above, where a refining agent according to the present invention is used, molten pig iron desulfurization can be more efficiently performed.

Specifically, a refining agent according to the present invention is conceived to efficiently reduce MgO, and to efficiently fix sulfur in molten pig iron as sulfide. Since Al is used as a refining agent, the reduction reaction and the sulfide production reaction described above are maximized, without being affected so much by the oxidation level of molten pig iron. Accordingly, the order of performing desulfurization step is not restricted in a series of steps of molten pig iron treatment. Since such desulfurization treatment is adopted, the series of treatment of molten pig iron can be achieved inexpensively with a high efficiency, thereby providing a very low concentration of phosphorus and sulfur, i.e., impurities.

Where a refining agent according to the present invention as described above is used in desulfurization treatment of such a series of treatment of molten pig iron, the desulfurization can be performed with a low refining agent unit requirement and a high efficiency. As a result, it is possible to reduce the total refining agent unit requirement in the molten pig iron treatment including the desulfurization treatment, and desiliconization treatment and/or dephosphorization treatment, and to lower the slag quantity exhausted from the series of treatment of molten pig iron.

The series of treatment of molten pig iron is formed such that at least one of desiliconization treatment and dephosphorization treatment is performed in addition to desulfurization treatment of molten pig iron, before decarburization of the molten pig iron obtained by tapping from blast furnace is finally performed. Removal of silicon may be performed during dephosphorization treatment, thereby omitting desiliconization treatment. In order to efficiently perform dephosphorization, however, desiliconization treatment may be separated from dephosphorization treatment, thereby performing both of the desiliconization treatment and dephosphorization treatment independently of each other. In such a series of treatment of molten pig iron, the treatment order is basically not limited to a specific one. For example, the treatment order is set to be (i) desiliconization treatment - desulfurization treatment - dephosphorization treatment in this order, (ii) desiliconization treatment - dephosphorization treatment - desulfurization treatment in this order, (iii) desulfurization treatment - desiliconization treatment - dephosphorization treatment in this order, (iv) desulfurization treatment - dephosphorization treatment in this order, or (v) desiliconization treatment - desulfurization treatment in this order.

In desiliconization treatment of such a series of molten pig iron treatment, it is preferable to reduce the silicon concentration after the treatment to 0.2 mass% or less, in order to improve the dephosphorization efficiency. Except for a case where the silicon concentration in molten pig iron from a blast furnace is low enough not to require specific desiliconization treatment, desiliconization treatment is performed by a desiliconization method in which a solid oxidation agent is added by various methods in a blast furnace or in the course up to a transportation container for molten pig iron; or a desiliconization method in which gas oxygen or a solid oxidation agent, and a refining agent are added by various methods, such as top blowing, putting-on, and injection, while using a molten pig iron ladle, transportation container, e.g., torpedo car, or special furnace.

Dephosphorization treatment also uses transportation period of molten pig iron after tapping, or a transportation container or special furnace. In general, a flux, such as fluorite, is added along with lime to perform the treatment, but lime alone may be used to perform the treatment, in light of environmental measures. In this case, a method of increasing the fusibility of lime, or increasing the dephosphorization reaction rate is adopted. In order to increase the fusibility of lime, it is possible to adopt various methods, such as a method of using particulate or powdered lime, and a refining method of adding a melting point lowering substance having a fusing effect on lime, or increasing molten iron oxide. Among them, where such a method is adopted that blows powdered lime with oxygen by oxygen feeding means, such as bottom blowing or top blowing, lime easily fuses and is supplied to positions where oxygen acts on molten pig iron to produce iron oxide, thereby allowing dephosphorization to efficiently proceed. A boron-based compound or alumina is used as the melting point lowering substance. On the other hand, in order to increase the dephosphorization reaction rate, oxygen feed conditions or stirring conditions are made proper to increase the mobility of phosphorus in iron oxide or molten pig iron. In this case, it is possible to select and use the number and form of lance nozzles or bottom blowing tuyeres for oxygen feed. Furthermore, where a series of molten pig iron treatment is performed, as described above, phosphorus can be efficiently removed, so that, after molten pig iron dephosphorization, the phosphorus concentration in the molten pig iron is lowered to 0.03% or less, i.e., an ultra low phosphorus concentration. In order to control the phosphorus concentration, the silicon concentration is preferably 0.2% or less, before the treatment. In this case, blast furnace molten pig iron with a silicon concentration of 0.2% or less may be used, or molten pig iron is used after it is subjected to desiliconization treatment to have a low silicon concentration of 0.2% or less, without reference to blast furnace molten pig iron with a silicon concentration of 0.2% or more or less.

Where a refining agent according to the present invention is used, as described above, desulfurization treatment provides a larger desulfurization effect by a smaller refining agent quantity, as compared to conventional techniques. It can readily provide a sulfur concentration of 0.005% or less in the molten pig iron stage.

Conventionally, in a series of molten pig iron treatment performed as described above, a large amount of a flux, such as fluorite, which increases fluorine (F) in slag, is used. This is so, because the molten pig iron treatment temperature is relatively low, and a higher basicity of slag is preferable for refining reactions in desiliconization, dephosphorization, and desulfurization. Accordingly, it is necessary to increase slag formability by adding fluorite or the like.

However, recently, environmental measures are required in relation to the quantity and quality of steelmaking slag. It is necessary to provide environmental measures in relation not only to converter slag, but also to all the molten pig iron treatment slag.

For this reason, recently, in dephosphorization treatment, it has been proposed to lower the silicon concentration in molten pig iron in advance so that a lime source is reduced, and lime fusing is conducted by oxygen feed or iron oxide, which is a solid oxygen source, without using fluorite. Also in desulfurization treatment, it has been thought to charge soda ash, or to use expensive metal magnesium as described above, so as to perform refining without using fluorite. However, the former entails a problem in that the alkaline content is increased, and thus is not effective in slag environmental measures, while the latter has a problem in the cost efficiency. Accordingly, conventional techniques cannot help using fluorite.

Furthermore, in a series of molten pig iron treatment, in order to prevent slag in each treatment from being carried over to the next step, a large-scale setup is required, and a problem arises in that the cost efficiency, such as yield, or productivity is impeded. Under the circumstances, slag in a former step cannot help being carried over to the next step. As a result, where the former step performs refining using fluorite, the slag of the next step comes to contain F therein. Accordingly, even if dephosphorization treatment can be performed without using fluorite, as described above, when desulfurization treatment employs fluorite, the end slag finally contains F to a large extent. It is necessary, therefore, to reduce F in slag generated in each treatment.

In relation to such requirements, where a refining agent according to the present invention is used in desulfurization treatment in a series of treatment of molten pig iron, the desulfurization treatment can be performed without using fluorite, in contrast to that of conventional techniques in which fluorite is inevitably used. Consequently, the consumption of fluorite is remarkably reduced in a series of treatment of molten pig iron, as compared to conventional techniques. In addition, where the composition of a refining agent is further adjusted in desiliconization treatment and/or dephosphorization treatment, the total consumption of fluorite can be 0.1 kg or less per ton of molten pig iron, which likely defines a permissible range in terms of influence on the environment caused by F quantity in slag after refining.

As described above, a series of treatment of molten pig iron can be performed with a refining agent using a very little fluorite. Where other materials containing substantially no F are selected for the refining agent, the F content in slag can be very low after molten pig iron treatment.

A refining agent according to the present invention includes an Al source, and aluminum dross used as the Al source sometimes contains F. Even in such a case, if the Al quantity is low, the F quantity in the generated slag can be suppressed at a level to prevent it from affecting the environment. It is preferable, however, to use a raw material containing less F as the Al source, and the most preferable to use a raw material containing substantially no F as the Al source.

In such a series of treatment of molten pig iron, the F concentration in slag generated in each treatment is preferably 0.2 mass% or less. Not only the F concentration in slag in the molten pig iron treatment, but also the F concentration in slag at tapping from blast furnace needs to be low. In this case, the F concentration is also preferably 0.2 mass% or less.

As described above, in a series of treatment of molten pig iron, a refining agent according to the present invention is used to perform desulfurization treatment. Consequently, an environmental measure is attained such that the F concentration in slag generated in the series of treatment of molten pig iron is lowered.

Next, an explanation will be given of preferable operation conditions for performing desulfurization treatment in a series of treatment of molten pig iron.

As described above, molten pig iron desulfurization is "reduction refining", and thus mainly causes temperature-lowering due to heat radiation or the like, thereby hardly allowing thermal control, although there is heat transfer in a small part of oxidation reduction reactions. On the other hand, desiliconization treatment or dephosphorization treatment is "oxidation refining" entailing oxygen feed or addition of solid oxidation agent. Accordingly, molten pig iron desiliconization or molten pig iron dephosphorization has a feature in that it allows temperature control, depending on how to supply an oxygen source. For example, where gas oxygen is used, the molten pig iron temperature can be raised due to a large amount of heat generated by an oxidation reaction. Where solid oxygen is mainly used, the molten pig iron temperature can be lowered due to an endothermic reaction.

In other words, it is difficult to control the molten pig iron temperature only by desulfurization treatment, while the temperature can be raised by selecting the oxidation agent quantity or the oxidation agent type in desiliconization or dephosphorization treatment. Accordingly, where at least one of the desiliconization treatment and dephosphorization treatment is performed before the desulfurization treatment, the molten pig iron temperature can be controlled to be a temperature suitable for the desulfurization treatment, in which a higher temperature is advantageous. In this case, in view of thermodynamics, before the desulfurization treatment, the molten pig iron temperature is raised to 1,300°C or more, at which the reaction set out in the formula (6) can effectively proceed, and is raised preferably to 1,350°C or more. In this case, it is preferable to control the temperature to prevent damages of a setup, such as wear of a lance or the refractory of impeller. For this, it is preferable to control the molten pig iron temperature at the end of a treatment immediately before the desulfurization treatment, in light of lead time between treatments, and the heat-retaining state of a molten pig iron container, so that the molten pig iron temperature satisfies the temperature described above before the desulfurization treatment.

In a series of treatment of molten pig iron as described above, desulfurization treatment using a refining agent according to the present invention can be performed by any one of the methods described above. In order to obtain a higher desulfurization efficiency, the mechanically stirring method is preferably used. In this case, a stirring power not less than a predetermined power is preferably applied to allow the desulfurization reaction to effectively proceed. The silicon concentration and the phosphorus concentration respectively in molten pig iron desiliconization and molten pig iron dephosphorization, which are performed in advance, should be as low as possible, thereby preventing a treatment from overlapping after desulfurization, although it depends on the steps after the desulfurization.

(3) Refining of molten steel (desulfurization, deoxidation, and inclusion control)

According to the present disclosure, a refining agent as described above is added to molten steel in various stages, so as to perform refining of the molten steel, i.e., desulfurization treatment, deoxidation treatment, and inclusion control. Where a refining agent as described above is used to perform refining of molten steel, the components of the molten steel are not limited to specific ones. It may be applied to almost any molten steel. For example, it may be applied to high carbon steel for bearing steel, high silicon steel sheet for electromagnetic steel or the like, ordinary medium carbon steel, ultra low carbon steel containing 20 ppm or less carbon, low carbon steel hardly containing silicon for thin sheets, high tensile steel containing about 0.2 to 0.8% silicon for thick plates, or the like.

In relation to the deoxidation level of molten steel, a refining agent according to the present invention contains metal Al. In consideration of the permissible level of the influence of the metal Al on the molten steel, Al deoxidation steel is most easily treated, as a matter of course. However, deoxidation steel by Si, C, or the like, hardly containing Al, may be used, so long as molten steel has an oxygen concentration at which produced Mg vapor acts on molten steel or inclusions. For example, it is possible to apply the treatment to steel containing high carbon and silicon for tire cords, without any problem. Relative to steel of the type that extremely disagrees with Al, a refining agent according to the present invention may be added with a smaller Al content. Relative to steel of the type that causes no problem by Al to be contained, a refining agent according to the present invention may be added with an excessive Al content corresponding to the deoxidation part or contained part in molten metal.

A typical process of manufacturing molten steel is a process of subjecting molten pig iron manufactured by a blast furnace or the like to desulfurization, dephosphorization, and decarburization in a converter or pretreatment; or a process of subjecting steel scrap to melting or refining treatment in an electric arc furnace, although any other process, such as an induction furnace or burner furnace, can be used.

Where a refining agent according to the present invention is used to perform refining (desulfurization, deoxidation, and inclusion control) of molten steel, the refining agent is added to molten steel finally manufactured in a melting furnace; a pouring flow from a melting furnace into a ladle; molten steel in a ladle, tapped from a melting furnace; molten steel in an incidental vessel used for treating molten steel in a ladle while moving it to the vessel by vacuum refining or the like; or molten steel in a tundish directly connected to a continuous casting machine.

A refining agent can be added by, e.g., the putting-on method of adding a refining agent from directly above molten steel in a melting furnace, ladle, or tundish; a method (powder blasting) of disposing a lance above a bath, and blowing a refining agent along with gas from the lance; or an injection method of injecting a refining agent from an injection lance immersed from the surface of a bath, or a tuyere (nozzle) arranged in the bottom or side wall under the surface of a bath. Where a ladle or tundish is provided with an incidental treatment setup, such as a vacuum vessel, a refining agent can be also added to molten steel in such an incidental treatment setup, e.g., the vacuum vessel, by the same method.

In order to promote the refining action of a refining agent according to the present invention, stirring may be applied to molten steel. For example, when a refining agent is added by the putting-on in a converter, electric furnace, ladle, or incidental setup as described above, gas stirring or electromagnetic stirring is applied by a nozzle, top blowing lance, or the like. Falling flow stirring may be utilized in the case of a pouring flow from a melting furnace to a ladle. As a matter of course, since a vacuum degassing apparatus having a ladle provided with a vacuum vessel operates to form recirculation flow of molten steel in the ladle and the vacuum vessel so as to stir it, this stirring can be utilized. Furthermore, as a matter of course, a refining agent according to the present invention may be added, while molten steel is heated by a secondary refining apparatus provided with an arc electrode for heating a ladle. Since such a secondary refining apparatus originally has a stirring function, and the molten steel is heated, the reaction of the refining agent is effectively promoted.

Also where a refining agent according to the present invention is used to perform refining of molten steel, the grain size and shape may be selected to be optimum, depending on the treatment purpose, process, setup, objective steel type, or the like. Where the injection method is employed, a refining agent should be powdered at a level to prevent nozzle clogging. As the need arises, a refining agent may be pelletized. However, where a large amount of refining agent is used in a melting furnace or the like, and the refining agent is pelletized, it may cause a problem in the cost efficiency. In general, where scattering loss is large due to the influences of a dust-gathering setup or heat convection when a refining agent is added, problems arise in the cost efficiency or operability. Where a refining agent is added in a process close to a casting step, such as a tundish, a slight amount of a powdered refining agent caught in molten steel is not sufficiently removed thereafter, and thus is carried over into steel materials, as the case may be. Accordingly, in this case, the refining agent is preferably pelletized to be pellets or briquettes in advance, because using a large amount of fine powdered refining agent causes a problem. Also where a refining agent according to the present invention is used to perform desulfurization or deoxidation of molten steel, it is preferable to form each raw material into primary particles of 1 mm or less in order to increase the reaction efficiency. In view of operability, such primary particles may be shaped into pelletized or lumped form sized to be 3 to 40 mm.

Inclusion control ion refining of molten steel as described above is performed by adding a refining agent according to the present invention to molten steel deoxidated by a predetermined element. As described above, a refining agent according to the present invention produces Mg vapor by a reduction reaction due to Al and causes a refining action. The Mg vapor acts on oxide-based inclusions to prevent the oxide-based inclusions from being large-sized due to agglomeration or the like. Alumina inclusions are dominant in molten steel, which contains 0.01% or more dissolved Al, and 30 ppm or less solute oxygen after deoxidation. Where a refining agent according to the present invention is added to this molten steel, the refining agent acts on the alumina inclusions and performs composition control to change them into spinel inclusions in part or in all, thereby restraining the alumina inclusions from being large-sized. Inclusions mainly containing silicate are dominant in molten steel, which contains less than 0.01% solute Al, and 30 ppm or less solute oxygen after deoxidation. Where a refining agent according to the present invention is added to this molten steel, the refining agent acts on the inclusions mainly containing silicate and performs composition control to increase the MgO concentration therein in part or in all, thereby restraining the inclusions mainly containing silicate from being large-sized. As usual, high clean steel, in which oxide-based inclusions are reduced as low as possible to obtain an extremely small number of surface defects, is in demand. Conventionally, there is a method of causing oxide-based inclusions to be agglomerated and large-sized so as to separate them by floating, or a method of causing metal Mg to act on inclusions to change them into spinel. The former entails problems in that large-sized inclusions do not necessarily rise up entirely between refining and casting, but are left in part and form product defects. The latter entails problems in that metal Mg for forming spinel evaporates at a high temperature of molten steel, and thus greatly disturbs the molten steel when it is added to the molten steel, thereby lowering the yield. However, where a refining agent according to the present invention is used in the latter case, high clean steel can be stably manufactured without causing the problems. Such inclusion control can be preferably performed by an RH vacuum degassing apparatus described later, but the same effect can be obtained by various ways, such as a ladle refining furnace, and continuous casting tundish.

Next, a concrete explanation will be given of such refining of molten steel.

An example will be first explained where a refining agent according to the present invention is add to molten steel in an electric furnace to perform desulfurization and deoxidation of the molten steel. The electric furnace is formed of an arc type melting furnace, which can melt a large amount of ordinary iron scrap. Electric power is supplied from a direct current or alternating current power supply to the molten steel by a graphite electrode disposed to be movable up and down at an upper portion of the furnace. In general, the electric furnace is provide with an upper lid, which is rotatable and movable up and down, an exhaust duct at a position connected to the upper lid, a gas combustion tower, a dust-gathering apparatus, or the like, other than the furnace main body. It is also provided with a nozzle at the bottom of the furnace and a lance near the side wall of the furnace, from which gas is blown in to perform gas stirring. The refining agent may be added from a gate on the front of the furnace by a bucket, or added from a hopper or shooter above the furnace. It may be added from a nozzle or lance. Where the refining agent is added from the hopper, it is possible to select whether it is added at a time or continuously by controlling a taking-out apparatus. As described above, a refining agent according to the present invention produces Mg vapor to directly cause a desulfurization, reaction or deoxidation reaction by Mg, and, at the same time, increases the efficiency of the desulfurization reaction or deoxidation reaction by the CaO content added thereto. Accordingly, in order to complete the treatment in a shorter time, an appropriate adding method are selected, such that intensive stirring is applied, or the grain size of the refining agent is made smaller, to swiftly reduce the oxidation level of slag, or to promote the desulfurization reaction, as well as depending on the reactions by Mg.

Where it is applied to molten steel in another melting furnace such as a converter, ladle, or tundish, there is no large difference in the function or treatment method itself. For example, a converter is used mainly for decarburization of molten iron, and is provided with a lance for blowing oxygen from above into the molten iron therein, and an exhaust duct disposed at an upper opening and connected to a gas combustion tower, dust-gathering apparatus, or the like. It is also provided with a nozzle for blowing gas at the bottom of the furnace, from which gas is blown in to perform gas stirring. The refining agent may be added from a hopper or shooter above the furnace. It may be added from a nozzle or lance. Similarly to the method described above, in order to complete the treatment in a shorter time, an option may be used such that intensive stirring is applied, or the grain size of the refining agent is made smaller, to swiftly reduce the oxidation level of slag, or to promote the desulfurization reaction. A tundish is disposed in continuous casting, between a ladle and a mold of a continuous casting setup. Molten steel is poured into it from the ladle at a rate of 2 to 10 tons per minute, while it is exhausted into the mold at the same time. Where the cross-sectional area of the horizontal section of the tundish is $0.5m^2$, the average velocity of flow is 0.5m to 2.5m per minute, which provides a mild flow as a treatment conditions. Also in the tundish, a refining agent can be added by various adding method. However, since the tundish is disposed near a casting machine, as described above, a problem of contamination may arise, depending on the adding method. It may be effective, therefore, to adopt a method of using a coarse-grained material subjected to pelletizing as the refining agent so as not to greatly disturb the molten steel, or calmly adding the refining agent by the putting-on method.

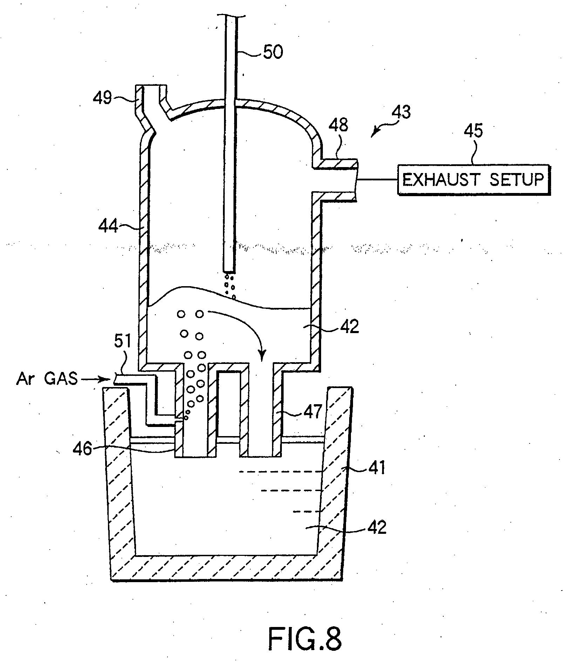

An example will be then explained where a refining agent according to the present invention is add to molten steel in an RH vacuum degassing process to perform desulfurization, deoxidation, and inclusion control of the molten steel. The RH vacuum degassing process is the mainstream as a secondary refining setup used after refining of molten steel is performed by a converter method or electric furnace method. FIG. 8 is a sectional view showing such an RH vacuum degassing setup.

The RH vacuum degassing setup includes a ladle 41 for storing molten steel 42, and a degassing section 43 for degassing molten steel 42. The degassing section 43 is formed of a vacuum vessel 44, which is immersed in the molten steel from above the ladle, and an exhaust setup 45 connected thereto. The vacuum vessel 44 is provided with two immersion pipes 46 and 47 on the bottom, and an exhaust port 48 connected to the exhaust setup 45 in an upper portion of the side surface. A charge port 49 is formed in an upper portion of the vessel, for adding miscellaneous materials, such as alloy, flux, or the like. A water-cooled lance 50 is inserted into the vacuum vessel 44, for blowing a refining agent according to the present invention therein. A pipe 51 is connected to one 46 of the immersion pipes, for introducing therein an inert gas, such as Ar gas. The two immersion pipes 46 and 47 are immersed in the molten steel 42 in the ladle 41, while the vacuum vessel 44 is vacuum-exhausted by the exhaust setup 45, so that the molten steel 42 is introduced into the vacuum vessel 44. At the same time, an inert gas is supplied into the immersion pipe 46 through the pipe 51, so that the molten steel 42 moves up in the immersion pipe 46 and moves down in the immersion pipe 47 to form recirculation flow, as the inert gas moves up. As described above, in the RH vacuum degassing setup, the molten steel 42 is subjected to the vacuum degassing treatment while the molten steel forms recirculation flow. The treatment is performed at a vacuum level of 133 Pa or less. For example, the RH vacuum degassing setup has a 300-ton scale, the inner diameter of the immersion pipes is about 0.6m, and Ar gas used as a gas for circulation is blown in at a rate of several $m^3$ per minute, to circulate molten steel at a rate of about 100 to 200 tons per minute. In this case, the average velocity of flow of the molten steel in the immersion pipes 46 and 47 reaches 0.75 to 1.5m per second, and the molten steel 42 is intensively stirred. Accordingly, where a refining agent according to the present invention is used to perform desulfurization and deoxidation of molten steel in an RH vacuum degassing process, such a intensively stirred state is utilized to remarkably promote a reaction, so that the treatment can be performed with a smaller refining agent quantity in a shorter time. In order to utilize such a intensively stirred state of molten steel for the refining reaction by a refining agent according to the present invention, it is effective to add a powdered refining agent through the lance 50 as shown in FIG. 8. Other than this, it is effective to blow it into the vacuum vessel 44 through a nozzle, or to blow it into the molten steel in the ladle 41 through a lance or nozzle. Furthermore, it is also effective to stir the molten steel in the vacuum vessel 44 by a circulating gas while the refining agent is present on the surface of the molten steel, or to disperse the refining agent by forcibly involving it in a down flow from the vacuum vessel 44 to the ladle 41.

As explained above with reference to examples applied to concrete processes, where a refining agent according to the present invention is used to efficiently perform refining of molten steel, it is necessary to cause Mg to efficiently act on the flowing molten steel, or to increase the reaction efficiency of the CaO content added thereto at the same time. For this, it is important to control the adding method or the current of the added refining agent, as well as the composition of the refining agent, in accordance with the current of the molten steel or the place for addition, so as to optimize the Mg production rate or the like. For example, in order to cause Mg to act on inclusions present in molten steel by a vacuum degassing setup, so as to change the composition or form of the inclusions, just causing a refining agent to float on the bath surface in a vacuum vessel is not enough. This is so, because produced Mg is scattered toward a pressure-reduced gas phase side, thereby reducing the efficiency of the produced Mg in acting on the molten steel. In this respect, as described with reference to the RH vacuum degassing process, where the refining agent is forcibly involved in the down flow, Mg can easily act on inclusions in the molten steel to increase the efficiency. As an example of controlling inclusions, since cluster-like inclusions formed mainly of alumina form defects in Al deoxidation steel, there is a case where inclusions are changed into spinel by means of MgO to restrain them from forming clusters, or where inclusions are controlled to silicate-based inclusions containing moderate MgO, avoiding alumina, to make the inclusions ductile, In accordance with the purpose of control, the production rate or production quantity of Mg to be produced is made proper. For example, in order to change 20 ppm alumina scattered in molten steel into spinel ($MgO \cdot Al_2O_3$), the necessary quantity of Mg is 3.7 ppm in stoichiometry. In consideration of the efficiency, however, addition conditions are selected such that Mg is properly generated from a refining agent, on the basis of the contact reaction time of the refining agent with circulating molten steel.

III. Recycling of molten pig iron desulfurization slag

(1) Recycling according to the present disclosure of desulfurization slag to molten pig iron desulfurization, using a mechanically stirring type desulfurization method

It has been found that, where a refining agent according to the present invention is used to perform molten pig iron desulfurization, using a mechanically stirring type desulfurization method, the effective rate of use of the refining agent according to the present invention is not always high, but a certain amount of non-reacted part is left after the molten pig iron desulfurization. Accordingly, if the non-reacted part can be recycled to a desulfurization agent, the desulfurization agent cost is lowered, and the slag quantity is reduced.

In consideration of this, after a refining agent according to the present invention is used to perform mechanically stirring type desulfurization treatment, desulfurization slag thus generated is subjected to a treatment of creating a new surface, and then the treated desulfurization slag is used for other molten pig iron desulfurization treatment. With this operation, the desulfurization slag generated by the mechanically stirring type desulfurization treatment can be effectively recycled. The recycling is not limited to any specific molten pig iron desulfurization treatment, but can be applied to any molten pig iron desulfurization treatment performed in general. The recycling can be applied to a process the same as or different from the process of generating the corresponding desulfurization slag. Since desulfurization slag can be recycled even in the same process, this is effective in a setup only for one molten pig iron desulfurization treatment process. The recycling in molten pig iron desulfurization can be applied not only to the mechanically stirring type desulfurization treatment, but also to other treatment, such as the injection type. However, the recycling is most effectively applied to the mechanically stirring type desulfurization treatment, because the recycling efficiency is high.

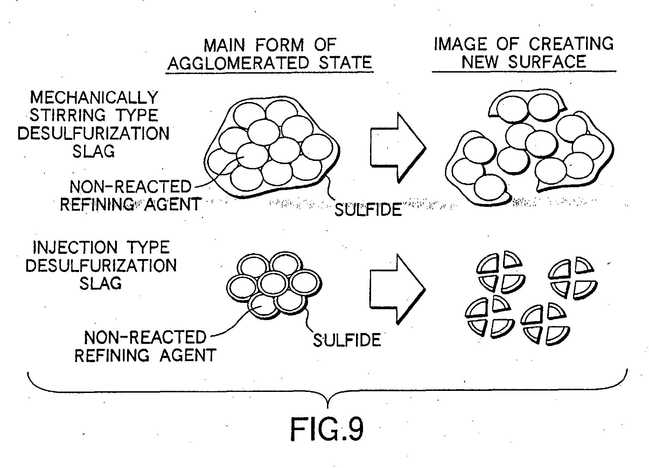

Desulfurization slag generated by the mechanically stirring type desulfurization method is suited to recycling for the following reason. Specifically, in the injection method, a fine powder refining agent is added to a deep portion of a bath, and causes a desulfurization reaction while it rises up in the bath. Accordingly, the reaction can be expected to occur for a short time, but a desulfurization-produced substance is formed in a superficial layer of the fine powder. After it rises to the bath surface, a desulfurization reaction can be hardly expected. Agglomeration starts after it rises to the bath surface, and brings about a form in which the desulfurization-produced substance is present on the surface of each of fine powder pieces, which have been agglomerated. On the other hand, in the mechanically stirring type desulfurization method, since a refining agent is added to a bath surface and stirred, the refining agent is involved from the bath surface into the bath, and agglomeration of the refining agent is caused near the bath surface from the beginning of addition. Consequently, the refining agent is agglomerated, while scarcely reacted components are wrapped therein. After the agglomeration starts, a surface portion of the refining agent in contact with metal reacts and produces a desulfurization-produced substance. This reaction is caused over the treatment time, and thus the reaction can be held for a long time. Under the reaction mechanism described above, after the desulfurization, the surface of agglomerated coarse grains is covered with the desulfurization-produced substance with a certain thickness, while a lot of non-reacted components are present inside it. As described above, the mechanically stirring type desulfurization method produces coarse grains in which a lot of non-reacted components are left therein, and thus allows a treatment of creating a new surface effective in a desulfurization reaction to be easily performed. The treatment time can be short, thereby increasing the effect of lowering generated slag quantity. On the other hand, in the injection method, as described above, fine powder of a desulfurization agent is covered with a desulfurization-produced substance. Accordingly, it is necessary to perform a difficult treatment of changing the fine powder into finer powder to create a new surface effective in a desulfurization reaction. This is not practical, because the steps and time are increased, and a loss due to scattering is caused. FIG. 9 is a view schematically showing a difference between molten pig iron desulfurization slag generated by a mechanically stirring type desulfurization method, and molten pig iron desulfurization slag generated by an injection method. In FIG. 9, desulfurization slag particles generated by the injection method is shown with a particle size almost the same as that of desulfurization slag particles generated by the mechanically stirring type desulfurization method, for the sake of convenience, but the former particles are actually smaller.

Next, a concrete treatment of desulfurization slag generated by a mechanically stirring type desulfurization method will be explained.

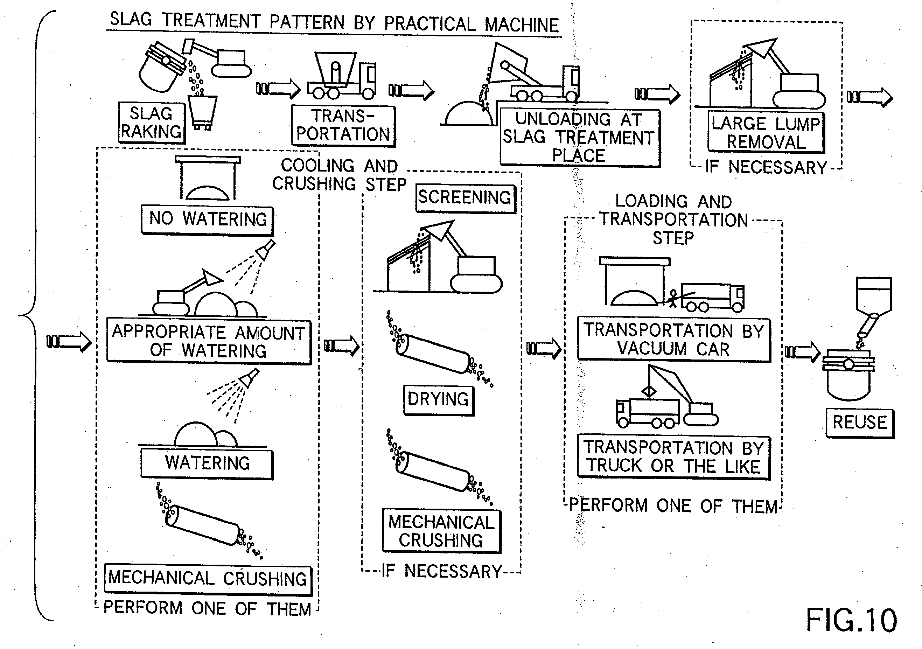

FIG. 10 is a view showing a desulfurization slag treatment pattern by a practical machine. In this treatment, desulfurization slag generated in the desulfurization step of a mechanically stirring type desulfurization method is removed from the bath, and transported to a slag treatment place. Then, as the need arises, the metal content having a large diameter is removed from the desulfurization slag by magnetic selection or screening with a sieve, and the desulfurization slag thus obtained is subjected to a treatment of creating a new surface by an arbitrary method. Then, as the need arises, the desulfurization slag is subjected to treatments, such as screening, drying, and mechanical crushing, and then it is transported to a desulfurization setup and recycled to a desulfurization agent.

A concrete treatment according to the present disclosure will be explained. The treatment at this time is exemplified by (i) crushing by watering treatment, (ii) crushing by watering and stirring treatment, (iii) crushing by allowing to cool, and (iv) screening of hot slag.

(i) Crushing by watering treatment

In this example, desulfurization slag generated in the desulfurization step is cooled and crushed at the same time by watering treatment, and then is subjected to drying treatment to create a new surface, and is recycled to a desulfurization agent. Specifically, a watering setup is used to excessively perform watering, so that the hot slag from the desulfurization treatment completely contains water. Then, the water-containing slag is completely dried by a drying apparatus, so that a fine-grained desulfurization agent with a maximum particle size of about 100 mm or less is obtained. The maximum of the particle size at this time is preferably 30 mm or less, and more preferably 5 mm or less. The drying method at this time is not limited to a specific one, but may be performed by a drying machine, or large-scaled setup, such as a rotary kiln, which is suitably selected, depending on the necessary treatment quantity or the like.

(ii) Crushing by watering and stirring treatment

In this example, desulfurization slag generated in the desulfurization step is cooled and crushed at the same time appropriately by watering and stirring treatment to create a new surface, and is recycled to a desulfurization agent. Specifically, the watering is performed by a watering setup uniformly on the hot slag from the desulfurization treatment to cool it, while the stirring is performed by a heavy machine, such as a shovel. Then, slag is cooled down to a normal temperature by leaving it, so that a fine-grained desulfurization agent with a maximum particle size of about 100 mm or less is obtained. The maximum of the particle size at this time is also preferably 30 mm or less, and more preferably 5 mm or less. A cooling target temperature by an appropriate amount of watering can be suitably set, depending on the necessary treatment or the like. However, where the watering is performed down to 100°C or less, drying treatment is required, and thus the watering is preferably stopped at 100°C or more. The stirring is performed to increase the cooling rate, and make the watering uniform. The stirring may be performed after the watering. The frequency of performing it can be suitably set. Furthermore, the stirring can be omitted, as the case may be.

(iii) Crushing by allowing to cool

In this example, desulfurization slag generated in the desulfurization step is cooled and crushed at the same time by allowing to cool to create a new surface, and is recycled to a desulfurization agent. Specifically, the hot slag from the desulfurization treatment is left in a state where the area of it in contact with air is as large as possible, while stirring is performed by a heavy machine, such as a shovel. For example, the hot slag is expanded with a thickness of 0.5m or less, and stirred about 1 to 3 times per day, so that a reproduced desulfurization agent, which is sufficiently fine-grained and has a temperature of 200°C or less, is obtained in three days. At this time, the thickness of the hot slag can be suitably set, depending on the requirement. The stirring is performed to increase the cooling rate. The frequency of performing it can be suitably set. Furthermore, the stirring can be omitted, where there is leeway in treatment time and quantity. The maximum particle size of the cooled and crushed desulfurization slag particles is 100 mm or less, preferably 30 mm or less, and more preferably 5 mm or less. As the need arises, mechanical crushing may be used together.

(iv) Screening of hot slag

In this example, desulfurization slag generated in the desulfurization step is subjected to screening by a sieve with a mesh size of about 30 mm × 30 mm to 100 mm × 100 mm, while the slag is still heated at 900 to 1,200°C, so that metal having a large diameter and desulfurization slag having a small diameter are separated from each other. The desulfurization slag having a small diameter has a new surface created thereon after the screening, and is recycled as it is to a desulfurization agent after natural cooling. At this time, although a Fe content of about 20 to 30% is left after screening, it is retrieved to the molten pig iron side when used in the next desulfurization, thereby increasing the iron yield.

Where the treatment is performed as described above, desulfurization slag, obtained by using a refining agent according to the present invention in the mechanically stirring type molten pig iron desulfurization method to perform molten pig iron desulfurization, can be effectively recycled. As a result, the molten pig iron desulfurization cost is lowered, and the slag generation quantity is reduced, thereby solving environment problems.

(2) Recycling according to the present disclosure of molten pig iron desulfurization slag to raw material to be sintered for blast furnace.

Conventionally, slag generated by desulfurization treatment is subjected to removal of the metal content, and is recycled to blast furnace cement, concrete material, fertilizer, or roadbed material for roads. However, since the desulfurization slag contains CaO and MgO contents as the main components, it absorbs moisture in the air and is powdered, with the laps of time. For this reason, the slag can be hardly used other than a cement raw material. Even where it is used for a cement raw material, a large cost is required for pre-treatment in practice.

Where a refining agent according to the present invention is used to perform desulfurization treatment, the amount of the MgO content in desulfurization slag is larger, as compared to the conventional techniques. Where the desulfurization slag is used for a cement raw material, the MgO concentration therein is so large that a sufficient strength cannot be obtained, as the case may be. Accordingly, new recycling use needs to be considered, for desulfurization slag generated when a refining agent according to the present invention is used to perform desulfurization.

For this reason, after a refining agent according to the present invention is used to perform desulfurization treatment of molten pig iron, desulfurization slag generated thereby is subjected to grain adjustment by crushing so as to use it as a raw material to be sintered.

The present inventors pay attention to the composition characteristics of desulfurization slag generated when a refining agent according to the present invention is used. As described above, the refining agent basically formed mainly of dolomite, in which CaO/MgO ratio is preferably 0.5 to 10, and more preferably more than 1.5 and up to 10.0. Desulfurization slag generated therefrom is formed mainly of CaO and MgO, with a high CaO ratio. At the end, S in molten pig iron is fixed as solid CaS, and non-reacted part of dolomite is left. In addition, a large amount of T.Fe content is present in the slag. Accordingly, it can be used in place of lime stone, serpentine, brucite, or magnesite, which is conventionally combined as a raw material to be sintered. Furthermore, an iron source can be retrieved, thereby obtaining a large cost merit. In view of the total desulfurization cost, the cost of pre-treatment for the sell-off of the slag is reduced.

Where desulfurization slag is used for a raw material to be sintered, following desulfurization treatment, desulfurization slag is collected by a suitable method, and subjected to grain adjustment by a crushing, and then it is combined as an ordinary raw material to be sintered. In this case, the composition of the desulfurization slag is grasped to combine it, thereby causing no problem. Even where the S concentration in the slag is high, the S can be lowered by a desulfurization setup, thereby causing no problem. As component control of blast furnace slag, $(Al_2O_3)$ control is important, but, where the desulfurization slag is combined by 10 mass% or less, the $(Al_2O_3)$ quantity increase is 0.5 mass% or less, thereby causing substantially no problem.

Next, a concrete structure for performing recycling of such desulfurization slag to raw material to be sintered for blast furnace will be explained.

At first, desulfurization slag, generated by using a refining agent according to the present invention to perform desulfurization treatment, is separated and collected from molten pig iron, and cooled by an arbitrary method. The method of this is not limited to a specific one, but employs an ordinary method. Then, the metal content having a large diameter is removed therefrom by magnetic selection or screening with a sieve, and the remaining desulfurization slag is collected for a raw material to be sintered. The grain size or particle size of the desulfurization slag is preferably suited to the raw material to be sintered, with a grain-adjusted size of, e.g., about 1 to 5 mm. There is a case where the desulfurization slag includes remaining metal having a small diameter. This part can be reused as an iron source in the next molten pig iron pretreatment step, thereby bringing about a merit, which greatly contributes to improvement of iron yield.

The desulfurization slag thus obtained for a raw material to be sintered is used by mixing it with iron ore, and other raw materials to be sintered for a blast furnace, while the representative components of the slag are grasped. The other conditions can follow conventional conditions.

As described above, where the desulfurization slag is used as a raw material to be sintered for a blast furnace, it is possible to realize recycling of the desulfurization slag at a low cost, without lowering the yield and productivity.

Desulfurization slag, generated by treating desulfurization slag generated in the mechanically stirring type desulfurization method described above, and applying it to molten pig iron desulfurization, may be also used for such a raw material to be sintered.

EXAMPLES

(Example 1)

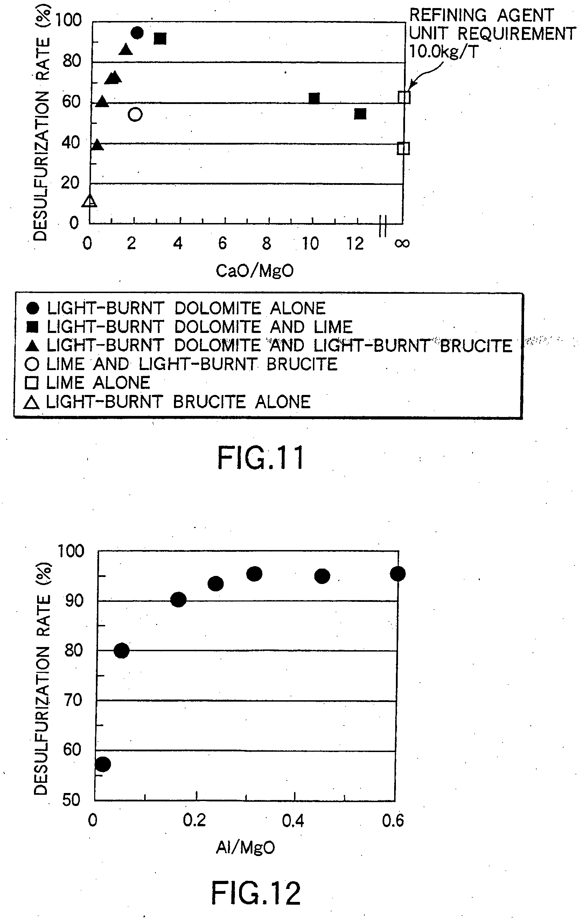

In this example, refining agents according to the present invention and refining agents according to comparative examples were used to desulfurize 200 tons of molten pig iron in a ladle, by a mechanically stirring setup. The molten pig iron used in the treatment was, in advance, subjected to desiliconization treatment at two stages of a runner in a cast house of a blast furnace, and a molten pig iron ladle used as a pig iron-receiving container, following tapping from a blast furnace. With the predesiliconization, the molten pig iron composition was set such that [Si] = 0.05 to 0.10 mass%, [C] = 4.3 to 4.6 mass%, [Mn] = 0.22 to 0.41 mass%, [P] = 0.10 to 0.13 mass%, and [S] before the treatment = 0.040 to 0.042 mass%. The molten pig iron temperature was 1,330 to 1,430°C. Each refining agent according to the present invention was used in a form prepared by mixing and crushing the following materials to have an average particle size 0.6 mm, or a form prepared by pelletizing them. Specifically, the materials were flux, which was formed by combining light-burnt dolomite (63.9 mass% CaO and 32.6 mass% MgO) having an average particle size of 3.0 mm, lime powder having an average particle size of 4.0 mm, and light-burnt brucite powder (83.6 mass% MgO, 3.4 mass% CaO, and 7.2 mass% $SiO_2$) having an average particle size of 4.1 mm, in several CaO/MgO ratios; and aluminum dross powder (70.1 mass% Al and 3.0 mass% Mg) having an average particle size of 0.3 mm. In the pelletized form, the mixed and crushed powder having an average particle size of 0.6 mm was supplied with 2.0 mass% soft pitch (a fixed carbon content of 33 mass%, and a viscosity of 4 poise at 60°C) used as a binder, and was kneaded to manufacture a refining agent in a lumped form with a 4 mm size. In the comparative examples, a refining agent, in which the flux was lime alone, or the flux was light-burnt brucite alone used as a MgO source, was used to perform desulfurization. TABLE 1 shows the flux composition, refining agent Al ratio, refining agent form, refining agent unit requirement, desulfurization result, and so forth. As shown in TABLE 1, the samples Nos. 5 to 19 showed higher desulfurization rates with smaller refining agent unit requirements, as compared to the comparative examples Nos. 1 and 2 using a refining agent with flux formed of lime alone. FIG. 11 shows the relationship between the CaO/MgO ratio and the desulfurization rate, where the Al/MgO ratio of the flux was set at 0.45, and the flux unit requirement except aluminum dross was set at 4.5 kg/t, uniformly. In the case of using light-burnt dolomite as a base, and adding light-burnt brucite (Nos. 5 to 9), as the CaO/MgO ratio increases, the desulfurization rate improves, and the desulfurization rate is highest in the case of using only light-burnt dolomite (No. 13). In the case of using light-burnt dolomite as a base, and adding lime (Nos. 10 to 12), as the CaO/MgO ratio increases, the desulfurization rate decreases. The desulfurization rate is highest in the case of using light-burnt dolomite only, and it decreases as the ratio of light-burnt dolomite decreases. In a range of the CaO/MgO ratio of 0.5 to 10, the desulfurization rate is not less than that in the case of increasing the unit requirement with flux formed of lime alone (No. 1). Accordingly, it is understood that a refining agent with a range of the CaO/MgO ratio of 0.5 to 10 is effective. Where the CaO/MgO ratio is larger than 10, the combination rate of lime increases, and the ratio of light-burnt dolomite relatively decreases, whereby it is thought that the effects of light-burnt dolomite are lowered.

Even where the CaO/MgO ratio is 2.0, there is a large difference in desulfurization rate between the case of using only light-burnt dolomite (No. 13) and the case of using light-burnt brucite and lime to form an equivalent composition (No. 14), such that the desulfurization rate is only about 55% in the case of mixing light-burnt brucite and lime. Also from this result, it can be said that use of dolomite is effective as a CaO source and MgO source. Where the flux was light-burnt brucite alone used as a MgO source (the comparative examples Nos. 3 and 4), the level of desulfurization was low with a desulfurization rate of about 10%.

FIG. 12 shows the relationship between the Al/MgO ratio and the desulfurization rate, where the CaO/MgO ratio was set at 2.0 only by light-burnt dolomite, and the flux unit requirement except aluminum dross was set at 4.5 kg/t, uniformly, (No. 13, and 15 to 19). From this, the following matters were confirmed. Specifically, as the Al/MgO ratio increased, the desulfurization rate improved, and where the Al/MgO ratio was 0.05 or more, the desulfurization rate was 80% or more. Accordingly, the Al/MgO ratio was preferably set at 0.05 or more. In this respect, the same result was obtained in both of cases where the refining agent was powdered and where the refining agent was pelletized.

(Example 2)(reference)

Aluminum dross powder (52.1 mass% Al and 2.5 mass% Mg) having an average particle size of 0.3 mm, light-burnt dolomite (63.9 mass% CaO and 32,6 mass% MgO) having an average particle size of 3.0 mm, seawater magnesia powder (91.0 mass% MgO, 3.2 mass% CaO, and 1.0 mass% $SiO_2$) having an average particle size of 0.3 mm, and coke powder (a fixed carbon content of 88%) having an average particle size of 2.2 mm were used as raw materials. The raw materials were combined to have ratios among Al, C, MgO, and CaO as shown in TABLE 2, and then they were crushed and mixed to have an average particle size of 0.5 mm. The raw materials were supplied with 3.0 mass% soft pitch (a fixed carbon content of 33 mass%, and a viscosity of 8 poise at 60°C) used as a binder, and was kneaded to manufacture a refining agent in a lumped form with a 35 mm size.

The refining agent was charged into molten pig iron and the Mg reduction rate was obtained. TABLE 2 also shows the result. As shown in TABLE 2, the Mg reduction rate was 90% or more in every case.

Then, each of the refining agents shown in TABLE 2 was used to perform desulfurization. 830 kg of each of the refining agents was charged into 230t of molten pig iron at a temperature of 1,350°C in a molten pig iron ladle, and the molten pig iron was stirred by an impeller. Then, it was confirmed that, 15 minutes later, an initial S concentration of 0.032 mass% decreased by 0.002 to 0.003 mass%, and the desulfurization rate obtained was 91 to 94%. As described above, a high desulfurization rate was obtained with such a small refining agent quantity.

(Example 3)

In this example, refining agents according to the present invention and refining agents according to comparative examples were used to desulfurize 300 tons of molten pig iron in a ladle by injection. As in the examples 1 and 2, the molten pig iron used in the treatment was, in advance, subjected to desiliconization treatment at two stages of a runner in a cast house of a blast furnace, and a molten pig iron ladle used as a pig iron-receiving container, following tapping from a blast furnace. With the predesiliconization, the molten pig iron composition was set such that [Si] = 0.05 to 0.10 mass%, [C] = 4.3 to 4.6 mass%, [Mn] = 0.22 to 0.41 mass%, [P] = 0.10 to 0.13 mass%, and [S] before the treatment = 0.040 to 0.42 mass%. The molten pig iron temperature was 1,330 to 1,430°C. Each refining agent according to the present invention was used in a form with a particle size of 1, mm or less, prepared by mixing flux, which was formed by combining dolomite, burnt lime, and light-burnt brucite in several CaO/MgO ratios; and aluminum dross having an Al content of 50 mass%. In the comparative examples, a refining agent, in which the flux was lime alone, or the flux was light-burnt brucite alone used as a MgO source, was used to perform desulfurization. For injection, each refining agent was carried by nitrogen gas to blow it into molten pig iron. For some of molten pig iron, aluminum dross was separately added thereto in advances, and only flux was injected. TABLE 3 shows the flux composition, refining agent Al ratio, refining agent unit requirement, desulfurization result, and so forth.

As shown in TABLE 3, the present invention samples Nos. 29 to 34 showed equivalent desulfurization rates with smaller refining agent unit requirements, as compared to the comparative examples Nos. 26 and 27 using a refining agent with flux formed of lime alone. In the case of the comparative example No. 28 using flux formed of light-burnt brucite alone used as a MgO source, the level of desulfurization was low with a desulfurization rate of about 10%. Among the present invention examples, more preferable desulfurization results were obtained with a flux CaO/MgO ratio of 1.0 to 10.

(Example 4)

This example considers the formula (11). Refining agents according to the present invention and refining agents according to comparative examples were used to desulfurize 150 tons of molten pig iron in a ladle, by a mechanically stirring setup. The molten pig iron used in the treatment was, in advance, subjected to desiliconization treatment at two stages of a runner in a cast house of a blast furnace, and a molten pig iron ladle used as a pig iron-receiving container, following tapping from a blast furnace. With the predesiliconization, the molten pig iron composition was set such that [Si] = 0.05 to 0.10 mass%, [C] = 4.3 to 4.6 mass%, [Mn] = 0.22 to 0.41 mass%, [P] = 0.10 to 0.13 mass%, and [S] before the treatment = 0.015 to 0.095 mass%. The molten pig iron temperature was 1,250 to 1,400°C. A refining agent according to the present invention was used in a form prepared by mixing and crushing aluminum dross and light-burnt dolomite, having a composition and form with the highest desulfurization efficiency, as described above, and adjusting the mixture to have a particle size of about 1 mm or less. A refining agent formed by combining them with burnt lime was also prepared in the same way. In the comparative examples, a conventional refining agent, formed of lime alone, or formed of lime and fluorite, was used as a refining agent. The aluminum dross used had an Al content of 70 mass%.

For the examples, the addition quantity of a refining agent was determined, using the formula (11), and compared with the addition quantity in the case of using a conventional refining agent formed of lime and fluorite under the same conditions. In the case of the examples, since the used manufacture method and mechanically stirring setup were the same, the stirring power $\omega$ and Al contribution rate c in the formula (11) could be consider to be the same among them in determining the addition quantity. Accordingly, in determining the addition quantity of a refining agent, only the molten pig iron temperature before the treatment, and the S concentration before the treatment need to be considered. TABLE 4 shows the used refining agent composition, addition quantity, molten pig iron temperatures before the treatment, S concentration before the treatment, and desulfurization results. In TABLE 4, the addition quantity of a refining agent is shown on the provision that the necessary quantity of a refining agent (Nos. 35 and 36) formed of lime and fluorite is 1 when it is used for desulfurization.

As shown in TABLE 4, in the samples Nos. 39 to 48, the following matters were confirmed. Specifically, an optimum addition quantity could be determined in accordance with various conditions in the molten pig iron temperature before the treatment and the S concentration before the treatment, in desulfurization with a refining agent basically formed of dolomite and aluminum dross according to the present invention. Furthermore, the desulfurization was performed to cause the S concentration to be 0.003 mass% or less after the treatment,

In the case of the comparative examples (Nos. 37 and 38) in which a refining agent formed of lime alone without adding fluorite in consideration of F-less was used to perform desulfurization, the following matters were confirmed. Specifically, the addition quantity was 1.3 to 1.4 times that of the case of using lime and fluorite. Furthermore, the examples, in which a refining agent was added at a charge quantity calculated from the formula (11), could reduce the addition quantity by about 25% in average, as compared to the comparative examples, on the assumption that the addition quantity of the two refining agents of the comparative examples were averaged and used as a reference. If a lot of desiliconization slag is left on the molten metal surface before the treatment, a refining agent may be set to have a composition with a high lime ratio. In this case, the addition quantity can be determined similarly on the basis of the formula (11), thereby causing the S concentration to be 0.003 mass% or less after the treatment.

(Example 5)

This example considers the formulas (12) and (13). Refining agents according to the present invention and refining agents according to comparative examples were used to desulfurize 200 tons of molten pig iron in a ladle, by a mechanically stirring setup. The molten pig iron used in the treatment was, in advance, subjected to desiliconization treatment at two stages of a runner in a cast house of a blast furnace, and a molten pig iron ladle used as a pig iron-receiving container, following tapping from a blast furnace. At this time, the desiliconization slag quantity carried into the desulfurization treatment was changed. The desiliconization slag was analyzed in advance to determine the representative values of each composition, so as to use them in calculating the refining agent charge quantity. TABLE 5 shows the representative composition of desiliconization slag at this time. With the pre-desiliconization, the molten pig iron composition was set such that [Si] = 0.05 to 0.10 mass%, [C] = 4.3 to 4.6 mass%, [Mn] = 0.22 to 0.41 mass%, [P] = 0.10 to 0.13 mass%, and [S] before the treatment = 0.040 to 0.42 mass%. The molten pig iron temperature was 1,330 to 1,430°C. There were prepared refining agents made within the range of the present invention, and refining agents according to the comparative examples made out of the range.

Each refining agent made within the range of the present invention was used in a form prepared by combining light-burnt dolomite, burnt lime, and light-burnt brucite in suitable CaO/MgO ratios, and adding aluminum dross thereto. Each refining agent according to the comparative examples was used in a form using lime alone, or a form using combination of light-burnt brucite (84 mass% MgO) used as a MgO source with aluminum dross. For the desulfurization treatment, each refining agent was prepared by mixing and crushing all the raw materials, and adjusting the mixture to have a particle size of about 1 mm or less, and then it was added at a constant quantity of 5 kg/T to molten pig iron. In the desulfurization treatment, slag sampling was performed. The aluminum dross used had a content of about 50 mass% Al and 0.15 mass% F. TABLE 6 shows the refining agent composition, pre-process slag quantity, $Q(\alpha_{cao} + \alpha_{MgO})/W(\alpha_{SiO2}$

$+ \alpha_{Al2O3}$) value, (CaO + MgO)/($SiO_2$ + $Al_2O_3$) value of treatment slag, and desulfurization rate.

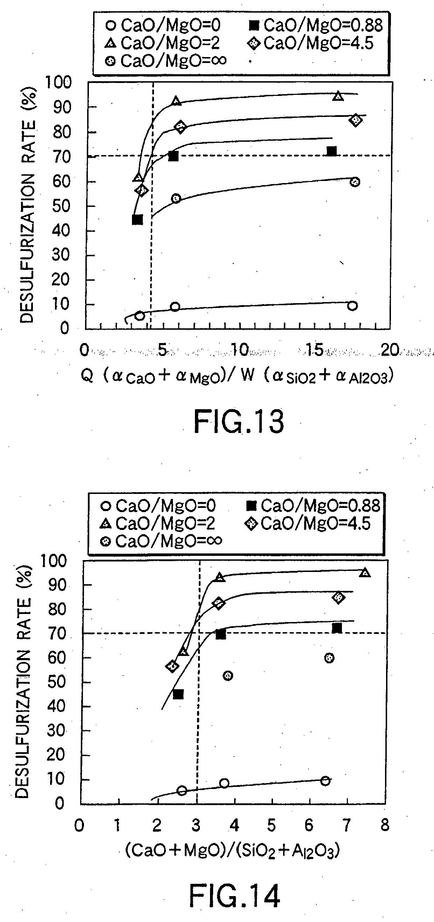

FIG. 13 shows the relationship between the Q($\alpha_{CaO}$ + $\alpha_{MgO}$)/W($\alpha_{SiO2}$ + $\alpha_{Al2O3}$) value and the desulfurization rate, in the case of setting Al/MgO = 0.45 to be constant, and setting the CaO/MgO value of flux at 0, 0.88, 2 (dolomite), 4.5, and $\infty$.

As shown in TABLE 6 and FIG. 13, where a refining agent (Nos. 49 to 53) with CaO/MgO = 0 or CaO/MgO = $\infty$ according to the comparative examples was used, a desulfurization rate of 70% likely defining the acceptable range was not ensured without reference to the Q($\alpha_{CaO}$ + $\alpha_{MgO}$)/W($\alpha_{SiO2}$ + $\alpha_{Al2O3}$) value. On the other hand, where a refining agent with CaO/MgO = 2 (dolomite), or CaO/MgO = 4.5 in the range of the present invention was used, a desulfurization rate of 70% was ensured if the Q($\alpha_{CaO}$ + $\alpha_{MgO}$)/W($\alpha_{SiO2}$ + $\alpha_{Al2O3}$) value was 4 or more, but the desulfurization rate decreased with an decrease in the value, and became less that 70% if the value was less than 4. Accordingly, it was confirmed that, even where a refining agent in the range of the present invention was used, if pre-process slag was present, it was necessary to satisfy Q($\alpha_{CaO}$ + $\alpha_{MgO}$)/W($\alpha_{SiO2}$ + $\alpha_{Al2O3}$) value $\geqq$ 4, in order to obtain a result not less than a desulfurization rate of 70% likely defining the acceptable range.

FIG. 14 shows the relationship between the (CaO + MgO)/($SiO_2$ + $Al_2O_3$) value and the desulfurization rate, in the case of setting Al/MgO = 0.45 to be constant, and setting the CaO/MgO value of flux at 0, 0.88, 2 (dolomite), 4.5, and $\infty$.

As shown in TABLE 6 and FIG. 14, where a refining agent with CaO/MgO = 0 or CaO/MgO = $\infty$ according to the comparative examples was used, a desulfurization rate of 70% likely defining the acceptable range was not ensured without reference to the (CaO + MgO)/($SiO_2$ + $Al_2O_3$) value.

On the other hand, where a refining agent with CaO/MgO = 2 (dolomite), or CaO/MgO = 4.5 in the range of the present invention was used, a desulfurization rate of 70% was ensured if the (CaO + MgO)/($SiO_2$ + $Al_2O_3$) value was 3 or more, but the desulfurization rate decreased with an decrease in the value, and became less that 70% if the value was less than 3.

Accordingly, it was confirmed that, even where a refining agent in the range of the present invention was used, if pre-process slag was present, it was necessary to satisfy (CaO + MgO)/($SiO_2$ + $Al_2O_3$) value $\geqq$ 3, in order to obtain a result not less than a desulfurization rate of 70% likely defining the acceptable range.

Furthermore, it was confirmed that, in every case, the F concentration in slag was 0.1 mass% or less after the desulfurization treatment, and thus, where the F content in the Al source was set at 0.15% or less, the F concentration in slag became sufficiently low.

(Example 6)

This example considers the formulas (12) and (13), as in the example 5. Refining agents according to the present invention and refining agents according to comparative examples were respectively injected into 300 tons of molten pig iron in a ladle to perform desulfurization treatment. As in the example 5, the molten pig iron used in the treatment was, in advance, subjected to desiliconization treatment at two stages of a runner in a cast house of a blast furnace, and a molten pig iron ladle used as a pig iron-receiving container, following tapping from a blast furnace. At this time, the desiliconization slag quantity carried into the desulfurization treatment was changed.

With the pre-desiliconization, the molten pig iron composition was set such that [Si] = 0.05 to 0.10 mass%, [C] = 4.3 to 4.6 mass%, [Mn] = 0.22 to 0.41 mass%, [P] = 0.10 to 0.13 mass%, and [S] before the treatment = 0.040 to 0.42 mass%. The molten pig iron temperature was 1,330 to 1,430°C. There were prepared refining agents made within the range of the present invention, and refining agents according to the comparative examples made out of the range.

Each refining agent made within the range of the present invention was used in a form prepared by combining light-burnt dolomite, burnt lime, and light-burnt brucite in suitable CaO/MgO ratios, and adding aluminum dross thereto. Each refining agent according to the comparative examples was used in a form using lime alone, or a form using combination of light-burnt brucite (84 mass% MgO) used as a MgO source with aluminum dross. For the desulfurization treatment, each refining agent was prepared by mixing and crushing all the raw materials, and adjusting the mixture to have a particle size of about 1 mm or less, and then it was added at a constant quantity of 5 kg/T to molten pig iron. In the desulfurization treatment, slag sampling was performed. The aluminum dross used was the same as that of the example 5. TABLE 7 shows the refining agent composition, pre-process slag quantity, Q($\alpha_{CaO}$ + $\alpha_{MgO}$)/W($\alpha_{SiO2}$ + $\alpha_{Al2O3}$) value, (CaO + MgO)/($SiO_2$ + $Al_2O_3$) value of treatment slag, and desulfurization rate.

As shown in TABLE 7, where a refining agent with CaO/MgO = 0 or CaO/MgO = $\infty$ according to the comparative examples was used, a desulfurization rate of 70% likely defining the acceptable range was not ensured without reference to the Q($\alpha_{CaO}$ + $\alpha_{MgO}$)/W($\alpha_{SiO2}$ + $\alpha_{Al2O3}$) value. On the other hand, where a refining agent with CaO/MgO = 1.5 to 4.5 in the range of the present invention was used, a desulfurization rate of 70% was ensured if the Q($\alpha_{CaO}$ + $\alpha_{MgO}$)/W($\alpha_{SiO2}$ + $\alpha_{Al2O3}$) value was 4 or more, but the desulfurization rate became less that 70% if the value was less than 4. Accordingly, it was confirmed that, even where a refining agent in the range of the present invention was used, if pre-process slag was present, it was necessary to satisfy Q($\alpha_{CaO}$ + $\alpha_{MgO}$)/W($\alpha_{SiO2}$ + $\alpha_{Al2O3}$) value $\geqq$ 4, in order to obtain a result not less than a desulfurization rate of 70% likely defining the acceptable range.

Furthermore, where a refining agent with CaO/MgO = 0 or CaO/MgO = ∞ according to the comparative examples was used, a desulfurization rate of 70% likely defining the acceptable range was not ensured without reference to the $(CaO + MgO)/(SiO_2 + Al_2O_3)$ value. On the other hand, where a refining agent with CaO/MgO = 1.5 to 4.5 in the range of the present invention was used, a desulfurization rate of 70% was ensured if the $(CaO + MgO)/(SiO_2 + Al_2O_3)$ value was 3 or more, but became less that 70% if the value was less than 3. Accordingly, it was confirmed that, even where a refining agent in the range of the present invention was used, if pre-process slag was present, it was necessary to satisfy $(CaO + MgO)/(SiO_2 + Al_2O_3)$ value ≧ 3, in order to obtain a result not less than a desulfurization rate of 70% likely defining the acceptable range. As a result, it was confirmed that, where desulfurization was performed by injection, it was preferable to satisfy the formulas (12) and (13), as in the mechanically stirring method.

Furthermore, it was confirmed that, in every case, the F concentration in slag was 0.1 mass% or less after the desulfurization treatment, and thus, where the F content in the Al source was set at 0.15% or less, the F concentration in slag became sufficiently low.

(Example 7)

This example will be explained in cases where a series of treatment of molten pig iron, which includes desulfurization treatment using refining agents according to the present invention and refining agents according to comparative examples, is performed after tapping from blast furnace.

After the tapping, 150 tons of molten pig iron in a ladle was sequentially subjected to pig iron pretreatments. The treatments was performed in the following three cases or orders: (a) molten pig iron desiliconization - molten pig iron desulfurization, (b) molten pig iron desiliconization - molten pig iron dephosphorization - molten pig iron desulfurization, and (c) molten pig iron dephosphorization - molten pig iron desulfurization. In tapping, the molten pig iron composition was that [Si] = 0.21 mass%, [C] = 5.0 mass%, [P] = 0.10 mass%, and [S] = 0.033 mass%, and the molten pig iron temperature was 1,495°C.

In the molten pig iron desulfurization, a mechanically stirring type (KR) desulfurization setup was used. Each refining agent according to the present invention was used in a form prepared by crushing and mixing a combination of light-burnt dolomite with aluminum dross having a metal Al content of 50 mass%. The combination ratio was set at 88: 12 in mass ratio. The grain size of each refining agent was set to be under 200 $\mu$m, and the addition quantity was changed to perform the desulfurization treatment. In the comparative examples, a refining agent, formed of lime alone, or formed of a combination of lime with 5% fluorite, was used to perform desulfurization.

In the molten pig iron desiliconization, oxygen was fed at a rate of 2,500 $Nm^3$/hr to molten pig iron in a ladle by a top blowing method, and nitrogen gas was blown therein at a rate of 2 $Nm^3$/min from a refractory immersion lance, to perform the desiliconization with stirring. Lime was used as a refining agent, and the refining agent addition quantity was set such that the slag basicity was 1.2, this level being a ratio of the CaO content in the refining agent relative to $SiO_2$ production quantity determined by the desiliconization quantity.

In the dephosphorization treatment, a treatment manner the same as the desiliconization treatment was used, but oxygen was fed at a rate of 5,000 $Nm^3$/hr to molten pig iron in a ladle by a top blowing method, and nitrogen gas was blown therein at a rate of 2 $Nm^3$/min from a refractory immersion lance, for stirring. A refining agent containing lime and 20% fluorite was used at a predetermined quantity in accordance with the silicon concentration and the temperature before the treatment.

In the series of treatment of molten pig iron, the slag mixture quantity from the blast furnace was about 5 kg/T. When each of the treatments was finished, the ladle was inclined and the generated slag was removed by a mechanical type slag removing apparatus. TABLE 8 shows the treatment conditions and the treatment results. TABLE 9 shows the total of refining agent quantity and the total of slag generation quantity in the series of treatment according to the present invention examples and the comparative examples, in terms of the average value of each process.

As shown in TABLE 9, it was confirmed that, in the present invention examples using a refining agent according to the present invention to perform desulfurization treatment, the refining agent quantity used and the slag quantity generated in the series of treatment of molten pig iron were lower than those of the comparative examples.

(Example 8)

This example will be explained in cases where molten pig iron treatment was performed in the treatment order (c) of the example 7, i.e., molten pig iron dephosphorization - molten pig iron desulfurization, and molten pig iron temperature at the end of the dephosphorization was changed.

In tapping, the molten pig iron composition was that [Si] = 0.21 mass%, [C] = 5.0 mass%, [P] = 0.10 mass%, and [S] = 0.033 mass%, and the molten pig iron temperature was 1,495°C.

In the molten pig iron desulfurization, a mechanically stirring type (KR) desulfurization setup was used. Each refining agent according to the present invention was used in a form prepared by crushing and mixing a combination of light-burnt dolomite with aluminum dross having a metal Al content of 50 mass%, as in a refining agent according to the present invention used in the example 7.

The treatment manner of the dephosphorization treatment was also the same, but sintered ore was added to molten pig iron in a ladle along with oxygen feed as described above. The ratio of gas oxygen relative to the sintered ore oxygen source was changed to control the end point temperature.

TABLE 10 shows the treatment conditions and the treatment results.

As shown in TABLE 10, the following matters were confirmed. Specifically, even where the molten pig iron temperature was 1,280°C before the desulfurization treatment, it was possible to perform the desulfurization. However, with an increase in the molten pig iron temperature before the desulfurization treatment, the refining agent quantity and the generated slag quantity were lowered in the desulfurization treatment. The molten pig iron temperature was preferably 1,300°C or more before the desulfurization treatment.

(Example 9)

This example will be explained in cases where a series of treatment of molten pig iron, which includes desulfurization treatment using refining agents according to the present invention and refining agents according to comparative examples, is performed after tapping from blast furnace.

After the tapping, 150 tons of molten pig iron in a ladle was sequentially subjected to pig iron pretreatments. The treatments was performed in the following four cases or orders: (d) molten pig iron desiliconization - molten pig iron desulfurization - molten pig iron dephosphorization, (e) molten pig iron desiliconization - molten pig iron dephosphorization - molten pig iron desulfurization, (f) molten pig iron desulfurization - molten pig iron desiliconization - molten pig iron dephosphorization, and (g) molten pig iron desulfurization - molten pig iron dephosphorization.

In tapping, the molten pig iron composition was that [Si] = 0.22 mass%, [C] = 5.0 mass%, [P] = 0.11 mass%, and [S] = 0.035 mass%, and the molten pig iron temperature was 1,490°C.

In the molten pig iron desulfurization, a mechanically stirring type (KR) desulfurization setup was used. Each refining agent according to the present invention was used in a form prepared by crushing and mixing a combination of light-burnt dolomite with aluminum dross having a metal Al content of 50 mass%. The combination ratio was set at 88: 12 in mass ratio. The grain size of each refining agent was set to be under 200 $\mu$m, and the addition quantity was set at a constant value of 6 kg per ton of molten pig iron to perform the desulfurization treatment. In the comparative examples, a refining agent, formed of lime alone, or formed of a combination of lime with 5% fluorite, was used to perform desulfurization.

In the molten pig iron desiliconization, oxygen was fed at a rate of 2,500 Nm$^3$/hr to molten pig iron in a ladle by a top blowing method, and nitrogen gas was blown therein at a rate of 2 Nm$^3$/min from a refractory immersion lance, for stirring. Lime alone or lime with fluorite was used as a refining agent and the refining agent addition quantity was changed such that the slag basicity was 2.0, this level being a ratio of the CaO content in the refining agent relative to SiO$_2$ production quantity determined by the desiliconization quantity.

In the dephosphorization treatment, a treatment manner the same as the desiliconization treatment was used, but oxygen was fed at a rate of 5,000 Nm$^3$/hr to molten pig iron in a ladle by a top blowing method, and nitrogen gas was blown therein at a rate of 2 Nm$^3$/min from a refractory immersion lance, for stirring. Lime alone or lime with fluorite was used as a refining agent and the refining agent addition quantity was changed such that the slag basicity was 4.0, this level being a ratio of the CaO content in the refining agent relative to SiO$_2$ production quantity determined by the desiliconization quantity.

In the series of treatment of molten pig iron, the mixture quantity of slag with a F concentration of 0.1 mass% from the blast furnace was about 5 kg/T. When each of the treatments was finished, the ladle was inclined and the produce slag was removed by a mechanical type slag removing apparatus.

TABLE 11 shows the treatment conditions and the treatment results. In TABLE 11, Nos. 114 to 121 denote cases in each of which a refining agent according to the present invention was used in the molten pig iron desulfurization, and the consumption of fluorite was set at 0.1 kg or less per ton of molten pig iron in the series of treatment of molten pig iron. Nos. 122 to 129 denote cases in each of which fluorite was used as a refining agent and/or the consumption of fluorite was set to be more than 0.1 kg per ton of molten pig iron in the series of treatment of molten pig iron.

As shown in TABLE 11, it was confirmed that, where a refining agent according to the present invention was used to perform the desulfurization treatment, and the total consumption of fluorite was set at 0.1 kg or less per ton of molten pig iron, the F concentration in slag of each treatment step fell in a permissible range of 0.2 mass% or less.

(Example 10)

In this example, refining agents according to the present invention and refining agents according to comparative examples were added to molten steel in an electric furnace to perform desulfurization and deoxidation of molten steel. The electric furnace used was a 150-ton melting furnace of an alternating current arc type. The furnace was provided with three nozzles at the bottom, for blowing argon at a rate of 300 Nl per minute in total. The furnace was also provided with a hopper or shooter above it for adding a refining agent at a time. Each refining agent according to the present invention was used in a form prepared by mixing and crushing light-burnt dolomite (64 mass% CaO and 33 mass% MgO), burnt lime (96 mass% CaO), and aluminum dross (50 mass% Al), and adjusting the mixture to have a grain size of 10 mm or less. Each refining agent according to the comparative examples was used in a form prepared by mixing and crushing only burnt lime and aluminum dross without using light-burnt dolomite. In electric furnaces, treatment is performed in the following sequence. At first, predetermined steel scrap is introduced along with lime into the electric furnace, using a 90-ton bucket. Oxygen feed are started by an auxiliary burner on the wall of the furnace or a water-cooled lance from the front gate of the furnace, while electrode heating is performed, to perform primary melting. About 20 minutes later, the lid of the furnace is opened, and 73 tons of steel scrap is further introduced. In 15 minutes, the introduced raw materials melt down to complete a melting period. Then, it comes to a refining period, in which carbon and aluminum dross are blown along with oxygen feed from the water-cooled lance, while electrode heating is performed, to adjust the oxidation level or carbon concentration in slag and molten metal, thereby increasing the temperature of the molten metal. Until the molten metal temperature becomes 1,650°C in 10 minutes, slag is caused to foam and exhausted from the front gate of the furnace. The slag is formed of lime initially introduced at a rate of 20 kg per ton of introduced steel scrap, oxide, such as silica sand with steel scrap adhered thereto, and non-oxide, such as Si, Mn, Al, Cr, and Ti, which are components of the steel scrap. Since the slag has a high oxidation level, and a basic component CaO in the slag cannot be increased, its desulfurization function is not high. Where the introduction amount of input sulfur is large, which probably depends on the steel scrap type, the sulfur concentration at this time reaches 0.05 mass% or more. The slag is generated at a rate of about 50 kg or more per ton of steel scrap, but the amount of residual slag in the furnace can be 10 kg or less by using flow slag. The molten steel has a carbon concentration of 0.1 to 0.15 mass%, and scarcely contains Al, but adding ferrosilicon brings about a silicon concentration of 0.1 to 0.15 mass%. After such a treatment was performed, a predetermined refining agent was added at a time to perform desulfurization and deoxidation, while bottom blowing gas stirring was used, for 10 minutes. TABLE 12 shows the refining agent arrangement, refining agent addition unit requirement, sulfur concentration before and after the treatment, desulfurization rate, oxygen concentration, and so forth, at this time.

As shown in TABLE 12, the samples Nos. 130 to 135 stably showed a desulfurization rate of 70 % or more, with a stably low oxygen concentration. On the other hand, the comparative examples Nos. 136 and 137 showed a lower level of desulfurization and deoxidation than that of the examples.


(Example 11)

In this example, refining agents according to the present invention and refining agents according to comparative examples were added to molten steel in a tundish to perform deoxidation and inclusion control of the molten steel. The molten steel used was high carbon aluminum deoxidation molten steel for bearing steel, or high carbon silicon deoxidation molten steel for tire cord steel. Either molten steel was introduced from a 300-ton ladle into a 50-ton capacity tundish, and a refining agent was added to the molten steel surface to perform the treatment. In order to prevent the molten steel from being greatly disturbed, the molten steel was not intentionally stirred. Each refining agent according to the present invention was used in a form prepared by mixing and crushing light-burnt dolomite (64 mass% CaO and 33 mass% MgO), light-burnt brucite (83.6 mass% MgO, 3.4 mass% CaO, 7.2 mass% $SiO_2$), and aluminum dross (50 mass% Al), and pelletizing the mixture to be pellets with a diameter of about 10 mm, and then packing them in units of 20 kg. A predetermined amount of such a refining agent was added by a method of calmly putting it on the tundish molten metal surface. Molten steel started being poured at 3,580°C from the ladle to the tundish, and each refining agent was added when molten steel in the tundish reached 30 tons. Each refining agent was added in accordance with the pouring rate of molten steel corresponding to casting rate, so that a predetermined unit requirement was obtained. Each refining agent according to the comparative examples was used in a form prepared by mixing and crushing only brucite and aluminum dross without using dolomite, and pelletizing the mixture to be pellets with a diameter of about 10 mm. Furthermore, there were also comparative examples in which no refining agent was added in the tundish.

Molten steel in the tundish was poured into a mold of 400-mm square to perform continuous casting, and bloom thus obtained was worked into a product, such as rod steel or wire, through cogging and rolling steps. T.[O] was measured as the amount of oxide-based inclusions in the product. Furthermore, the form of the inclusions and the MgO concentration in the inclusions were measured, and the product defective rate was obtained. For bearing steel, the product defective rate was obtained on the basis of the rate of achieving a standard of fatigue rupture strength. For tire cord material, it was obtained on the basis of the rate of generating rupture defects in the final working step. TABLE 13 shows the refining agent arrangement, refining agent addition unit requirement, T.[O] before and after the treatment, inclusion form, inclusion MgO quantity, and product defective rate, at this time. In TABLE 13, in the column of the inclusion form, A stands for

$Al_2O_3$, M for MgO, S for $SiO_2$, and N for MnO.

As shown in TABLE 13, it was confirmed that the samples Nos. 138 to 143 showed a stably low T.[O] after the treatment, and thus the cleanliness improved. The inclusion form contained MgO, and, in the case of bearing steel, inclusion alumina was reformed into spinel. In the case of tire cord material, silicate contained a suitable amount of MgO, thereby causing ductile improvement of inclusions. Accordingly, in the examples, the product defective rate was extremely low with less than 1%. On the other hand, the comparative examples Nos. 144 to 147 showed a T.[O] after the treatment, slightly higher than that of the examples. Furthermore, the inclusion form did not contain MgO, and the product defective rate was high with 3.2 to 6.3%.

(Example 12)

In this example, refining agents according to the present invention and refining agents according to comparative examples were added to molten steel in an RH vacuum degassing setup to perform desulfurization, deoxidation, and inclusion control of the molten steel. Each refining agent was added by an immersion lance to molten steel in a ladle, or added by a shooter to a vacuum vessel, using a 300-ton RH vacuum degassing setup. Each refining agent according to the present invention was used in a form prepared by using light-burnt dolomite (64 mass% CaO and 33 mass% MgO) and aluminum dross (50 mass% Al) as essential components, and mixing and crushing them with light-burnt brucite (83.6 mass% MgO, 3.4 mass% CaO, and 7.2 mass% $SiO_2$) or burnt lime (96 mass% CaO) at a predetermined combination rate. Then, the form was prepared by powdering the mixture with a diameter of 1 mm or less for use, or further pelletizing the powder to be pellets with a diameter of about 10 mm for use. The powdered agent was used for addition from the immersion lance, while the pelletized agent was used for addition from the shooter. Each refining agent according to the comparative examples was used in a form prepared by using only light-burnt brucite or burnt lime and aluminum dross without using dolomite, and similarly powdering or pelletizing it. Furthermore, there was also a comparative example in which no refining agent was added in the RH vacuum degassing setup.

Where each refining agent was added from the lance, it was performed during vacuum treatment in which the immersion pipes of a vacuum vessel were immersed in molten steel held in the ladle. In order to finally adjust steel type components in the vacuum treatment, an alloy agent, such as Mn or Si, and a deoxidation agent Al were added, and then the refining agent was added from the immersion lance. Before blowing, the molten steel was low carbon steel with [C] = 0.02 to 0.04 mass%, and the composition was that [Si] $\leqq$ 0.02 mass%, [Mn] = 0.15 to 0.25 mass%, and [Al] = 0.02 to 0.04 mass%. In this case, the deoxidation form is so called aluminum deoxidation steel, in which the inclusions in molten steel are formed mainly of alumina in general. At this time, the molten steel temperature was 1,625 to 1,630°C. The refining agent was blown at a blowing rate of 50 to 150 kg per minute, into a position directly below the immersion pipe for lifting molten metal up, and was circulated such that it entered the vacuum vessel while being involved in an up flow of the molten steel, and returned into the ladle through the other immersion pipe. The refining agent was blown in until it reached a predetermined unit requirement, and, after blowing, the immersion lance was withdrawn to a position above the ladle. Then, the molten steel was stirred for 10 minutes by circulating gas from the immersion pipes, so that the blown refining agent was raised and separated from the molten steel. After the treatment, the molten steel temperature was 1,570 to 1,585°C.

Where each refining agent was added in the vacuum vessel, it was performed on molten steel having substantially the same composition after component adjustment and deoxidation were performed by vacuum treatment. The molten steel temperature was 1,605 to 1,610°C. The refining agent was continuously added at a rate equivalent to the lance blowing, until it reaches a predetermined unit requirement. After addition, the molten steel was stirred for 10 minutes by circulating gas from the immersion pipes. After the treatment, the molten steel temperature was 1,575 to 1,580°C.

The molten steel in the ladle thus treated under the conditions described above was subjected to continuous casting, and a slab thus obtained was rolled to manufacture a very thin product. T.[O] was measured as the amount of oxide-based inclusions in the slab material. Furthermore, the form of the inclusions and the MgO concentration in the inclusions were measured, and the product defective rate was obtained. The defective rate was obtained on the basis of the rate of generating surface defects in the product. TABLE 14 shows the refining agent adding method, arrangement, addition unit requirement, [S] and T.[O] before and after the treatment, inclusion MgO quantity, and product defective rate, at this time. In TABLE 14, in the column of the adding method, INJ stands for addition by the lance blowing, and VAC for addition in the vacuum vessel.

As shown in TABLE 14, it was confirmed that the samples Nos. 148 to 153 showed stably low [S] and T.[O] after the treatment, and thus the cleanliness improved. The inclusion form contained MgO, and inclusion alumina was reformed into spinel. In the present invention, the product defective rate was extremely low with 1.1% or less. On the other hand, the comparative examples Nos. 154 to 158 showed [S] and T.[O] after the treatment, relatively higher than those of the examples. Furthermore, the inclusion form contained less MgO, and the product defective rate was high with 3.7 to 6.1%.

(Example 13)

In this example, refining agents according to the present invention were used in an RH vacuum degassing setup to refine about 250 tons or 300 tons of non-deoxidation molten steel tapped from a converter and having a [C] content of 0.02 to 0.06 mass%, so as to perform making high clean molten steel. In comparative examples, no refining agent was used in the RH vacuum degassing setup to similarly perform the making molten steel.

At this time, the following treatment conditions were used in the RH vacuum degassing apparatus.

Vacuum level of RH vacuum degassing apparatus: 67 to 267 Pa

Ar gas flow rate for circulation: 2 to 4 $Nm^3$/min After the vacuum treatment was performed for a predetermined time under the conditions described above, [O] in the molten steel was measured. In accordance with the measured [O] value, metal Al was added to the molten steel to obtain an Al content of 0.01 to 0.05 mass%, and deoxidation of the molten steel was performed. Following the Al addition, a refining agent was added into the vacuum vessel from a raw material charge port or a water-cooled lance. After the refining agent addition, the molten steel was circulated for a predetermined time, and the treatment was completed. The molten steel thus obtained was then subjected to continuous casting. The number of cluster-like inclusions in a slab formed by the continuous casting was examined by microscope. Also, it was performed to measure a product defect index mainly caused by alumina inclusions in the slab after cold rolling. TABLE 15 shows the heat size, blowing gas flow rate, refining agent adding method, addition quantity and composition, number of clusters in the slab, and product defect index.

As shown in TABLE 15, in the examples, in which a refining agent according to the present invention was added to molten steel after deoxidation, the number of cluster-like inclusions was small, thereby extremely lowering the product defect index. On the other hand, where no refining agent according to the present invention was used to perform the RH vacuum degassing treatment, the number of cluster-like inclusions was large, thereby increasing the product defect index with 2.5 or more.

(Example 14)

This example will be explained in cases where molten pig iron desulfurization slag was recycled to raw material to be sintered for blast furnace.

After a refining agent according to the present invention was used to perform desulfurization treatment, the desulfurization slag was separated and collected from the molten pig iron. The slag was cooled by an arbitrary method, and the metal content having a large diameter was removed therefrom, thereby preparing desulfurization slag for raw materials to be sintered.

TABLE 16 shows the chemical compositions of raw materials conventionally used for sintered ore, and desulfurization slag obtained in the case of using a refining agent according to the present invention to perform desulfurization treatment.

The raw materials shown in TABLE 16 were subjected to grain adjustment, and combined as shown in TABLE 17 to manufacture raw materials to be sintered. It was confirmed that, according to the example, the desulfurization slag could be used in place of serpentine, brucite, and magnesite, which were low $SiO_2$ ores contained in the conventional example. It was also confirmed that, the raw material to be sintered according to the present invention example had an increase of about 0.5 mass% in $Al_2O_3$ concentration, but this level caused no problem in practice.

Desulfurization slag obtained in the case of using a refining agent according to the present invention to perform desulfurization treatment can be used in place of dolomite in a raw material to be sintered, although this is not shown in this example.

Accordingly, it was confirmed that desulfurization slag obtained in the case of using a refining agent according to the present invention to perform desulfurization treatment can be utilized as a raw material to be sintered.

[Industrial Applicability]

As has been explained, according to the present invention, since Al, MgO, and CaO are used as main components, the rate of MgO changing into Mg vapor is increased. Since a material, in which MgO and CaO are close to or in contact with each other in a minute state, is used as a MgO source and CaO source, the reactivity is increased. Accordingly, refining of molten iron, using a Mg source, can be performed with an extremely high efficiency. Where dolomite, which is inexpensive, is used as such a MgO source and CaO source, refining of molten iron, using a Mg source, can be performed with an extremely high efficiency and inexpensively.

Where Al, MgO, and CaO are used as main components, while the Al used as a reducing agent is partly replaced with C, which is inexpensive, refining of molten iron can be also performed inexpensively. In this case, a refining agent having a material, typically dolomite, in which MgO and CaO are close to or in contact with each other in a minute state, is used as a MgO source and CaO source, the effect described above can be also obtained.

A refining agent according to the present invention has an extremely high industrial value, because it exerts an excellent refining effect, where it is applied to desulfurization of molten pig iron, or desulfurization or deoxidation of molten steel, and because it allows inclusion control after deoxidation of molten steel to reduce the number of product defects.

Table 1

| | | Comparative Example | | | | Present Invention Example | | | | | | | | | | | | | | | | |
|---|---|---|---|---|---|---|---|---|---|---|---|---|---|---|---|---|---|---|---|---|---|---|
| No. | | 1 | 2 | 3 | 4 | 5* | 6* | 7* | 8* | 9 | 10 | 11 | 12 | 13 | 14 | 15 | 16 | 17 | 18 | 19 |
| Raw Material Arrangement (mass%) | Light-burnt Dolomite | - | - | - | - | 22 | 34 | 51 | 59 | 72 | 65 | 26 | 22 | 83 | - | 77 | 87 | 90 | 92 | 98 |
| | Lime | 96 | 96 | - | - | - | - | - | - | - | 22 | 68 | 73 | - | 52 | - | - | - | - | - |
| | Light-burnt Brucite | - | - | 65 | 64 | 48 | 38 | 25 | 18 | 9 | - | - | - | - | 31 | - | - | - | - | - |
| | Al dross | 4 | 4 | 35 | 34 | 30 | 28 | 24 | 21 | 20 | 14 | 5 | 5 | 17 | 17 | 21 | 13 | 10 | 6 | 2 |
| | Binder | - | - | - | 2 | - | - | - | 2 | - | - | - | - | - | - | 2 | - | - | 2 | - |
| Composition (mass%) | CaO | 96 | 96 | - | - | 17 | 26 | 38 | 43 | 51 | 67 | 87 | 89 | 53 | 58 | 50 | 56 | 58 | 59 | 62 |
| | MgO | - | - | 54 | 54 | 57 | 51 | 43 | 39 | 34 | 22 | 9 | 7 | 27 | 27 | 25 | 28 | 29 | 30 | 32 |
| | Al | 2.8 | 2.8 | 24 | 24 | 26 | 23 | 19 | 18 | 15 | 10 | 4 | 3 | 12 | 12 | 15 | 9 | 7 | 5 | 2 |
| | Al/MgO | - | - | 0.45 | 0.45 | 0.45 | 0.45 | 0.45 | 0.45 | 0.45 | 0.45 | 0.45 | 0.45 | 0.45 | 0.45 | 0.6 | 0.31 | 0.23 | 0.16 | 0.05 |
| | CaO/MgO | 8 | 8 | 0 | 0 | 0.3 | 0.5 | 0.88 | 1.11 | 1.5 | 3.0 | 10 | 12 | 2.0 | 2.0 | 2.0 | 2.0 | 2.0 | 2.0 | 2.0 |
| Refining Agent Unit-requirement (kg/T) | | 10.0 | 4.7 | 6.9 | 7.1 | 6.5 | 6.2 | 5.9 | 5.8 | 5.6 | 5.2 | 4.8 | 4.7 | 5.4 | 5.4 | 5.8 | 5.2 | 5.0 | 4.8 | 4.6 |
| Refining Agent Form | | Powder | Powder | Powder | Lump | Powder | Powder | Powder | Lump | Powder | Powder | Powder | Powder | Powder | Powder | Lump | Powder | Powder | Lump | Powder |
| Result | Desulfurization Rate (%) | 62.0 | 38.5 | 11.9 | 12.5 | 39.6 | 61.0 | 71.9 | 73.4 | 85.9 | 91.0 | 62.3 | 55.2 | 94.5 | 54.4 | 95.0 | 95.0 | 93.0 | 90.0 | 79.0 |

* not of the claimed invention

30

Table 2

| No. | | 20 | 21 | 22 | 23 | 24 | 25 |
|---|---|---|---|---|---|---|---|
| Raw Material Arrange - ment (mass%) | Light-burnt Dolomite | 53.7 | 52.0 | 57.6 | 71.2 | 79.4 | 77.9 |
| | Seawater Magnesia | 23.0 | 22.3 | 14.4 | 7.9 | 0.0 | 0.0 |
| | Al dross | 18.3 | 17.7 | 24.2 | 14.5 | 17.2 | 20.5 |
| | Coke Powder | 4.9 | 7.9 | 3.8 | 6.5 | 3.3 | 1.6 |
| | Binder | 3.0 | 3.0 | 3.0 | 3.0 | 3.0 | 3.0 |
| Composition (mass%) | Al | 10.5 | 10.1 | 14.3 | 8.1 | 9.8 | 11.8 |
| | C | 4.7 | 7.7 | 3.8 | 6.1 | 3.2 | 1.6 |
| | MgO | 43.2 | 41.8 | 37.2 | 33.4 | 29.1 | 29.2 |
| | CaO | 38.5 | 37.3 | 42.2 | 49.3 | 55.4 | 55.2 |
| Al/MgO | | 0.24 | 0.24 | 0.38 | 0.24 | 0.34 | 0.41 |
| C/MgO | | 0.11 | 0.18 | 0.10 | 0.18 | 0.11 | 0.05 |
| CaO/MgO | | 0.89 | 0.89 | 1.13 | 1.47 | 1.91 | 1.89 |
| Mg Reduction Rate (%) | | 90.1 | 91.1 | 93.3 | 93.2 | 92.1 | 92.9 |
| Desulfrization Rate (%) | | 91 | 92 | 94 | 93 | 93 | 93 |

Table 3

| | No. | Refining Agent | | | | | Result Desulfurization Rate (%) |
| | | Flux Composition CaO/MgO | Al Unit-Requirement (kg/T) | Pre- charged Al Unit-requirement (kg/T) | Refining Agent Unit-requirement (kg/T) | Al Ratio (Al dross/flux Ratio) (wt%) | |
|---|---|---|---|---|---|---|---|
| Comparative Examlpe | 26 | ∞ (Lime Alone) | 0.45 | No | 11.0 | 8.2 | 82.5 |
| | 27 | ∞ (Lime Alone) | 0.45 | 0.1 | 11.0 | 10.0 | 85.4 |
| | 28 | 0 (MgO Source Alone) | 0.45 | No | 11.0 | 8.2 | 7.5 |
| Examlpe | 29 | 0.8 * | 0.3 | No | 7.3 | 8.2 | 48.8 |
| | 30 | 1.67 | 0.3 | No | 7.3 | 8.2 | 85.3 |
| | 31 | 8 | 0.3 | No | 7.3 | 8.2 | 73.2 |
| | 32 | 1.2 * | 0.3 | No | 7.3 | 8.2 | 71.0 |
| | 33 | 12 * | 0.3 | No | 7.3 | 8.2 | 53.7 |
| | 34 | 1.67 | 0.3 | 0.2 | 7.3 | 13.7 | 90.2 |
| *refining agent not of the claimed invention | | | | | | | |

Table 4

| | No. | Treatment Conditions | | | | Result |
|---|---|---|---|---|---|---|
| | | Refining Agent Composition | Addition Quantity | Temperature | [S]i | Desulfrization Rate (%) |
| Comparative Example | 35 | Lime and Flourite | 1.00 | 1290 | 0.024 | 87.5 |
| | 36 | Lime and Flourite | 1.00 | 1350 | 0.035 | 94.3 |
| | 37 | Lime Only | 1.38 | 1290 | 0.024 | 87.5 |
| | 38 | Lime Only | 1.30 | 1340 | 0.034 | 94.1 |
| Example | 39 | Dolomite and Al dross | 0.78 | 1350 | 0.035 | 94.3 |
| | 40 | Dolomite and Al dross | 0.91 | 1280 | 0.019 | 89.5 |
| | 41 | Dolomite and Al dross | 0.65 | 1400 | 0.040 | 95.0 |
| | 42 | Dolomite and Al dross | 0.77 | 1360 | 0.026 | 92.3 |
| | 43 | Dolomite and Al dross | 0.98 | 1290 | 0.024 | 91.7 |
| | 44 | Dolomite and Al dross | 0.99 | 1250 | 0.015 | 86.7 |
| | 45 | Dolomite and Al dross | 0.94 | 1310 | 0.045 | 95.6 |
| | 46 | Dolomite and Al dross | 0.83 | 1330 | 0.030 | 93.3 |
| | 47 | Dolomite, Lime and Al dross | 1.08 | 1290 | 0.025 | 92.2 |
| | 48 | Dolomite, Lime and Al dross | 0.85 | 1350 | 0.028 | 92.9 |

Table 5

| Desiliconization Slag Composition (%) | | | | |
|---|---|---|---|---|
| $SiO_2$ | $Al_2O_3$ | CaO | MgO | T.Fe |
| 52 | 5 | 12 | 1 | 10 |

Table 6

| No. | Refining Agent | | | | Pretreatment Slag Quantity (T) | $Q(\alpha_{CaO}+\alpha_{MgO})/W(\alpha_{SiO2}+\alpha_{Al_2O3})$ Value | (CaO+MgO)/(SiO$_2$+Al$_2$O$_3$) Value of Slag in Treatment | Desulfurization Rate (%) |
|---|---|---|---|---|---|---|---|---|
| | CaO/MgO | CaO Source | MgO Source | Al/MgO | | | | |
| 49 | ∞ | Lime | - | - | 0.1 | 17.5 | 6.5 | 60 |
| 50 | ∞ | Lime | - | - | 0.3 | 5.8 | 3.8 | 53 |
| 51 | 0 | - | Brucite | 0.45 | 0.1 | 17.5 | 6.4 | 10 |
| 52 | 0 | - | Brucite | 0.45 | 0.3 | 5.8 | 3.7 | 9 |
| 53 | 0 | - | Brucite | 0.45 | 0.5 | 3.5 | 2.6 | 6 |
| 54 | 0.88 * | Dolomite and Brucite | | 0.45 | 0.5 | 3.4 | 2.5 | 45 |
| 55 | 1.11 * | Dolomite and Brucite | | 0.45 | 0.5 | 3.6 | 2.7 | 50 |
| 56 | 1.5 | Dolomite and Brucite | | 0.45 | 0.5 | 3.5 | 2.8 | 55 |
| 57 | 2 | Dolomite alone | | 0.45 | 0.5 | 3.3 | 2.6 | 63 |
| 58 | 3 | Dolomite and Lime | | 0.45 | 0.5 | 3.7 | 2.4 | 60 |
| 59 | 4.5 | Dolomite and Lime | | 0.45 | 0.5 | 3.5 | 2.3 | 57 |
| 60 | 0.88 * | Dolomite and Brucite | | 0.45 | 0.1 | 16 | 6.7 | 72 |
| 61 | 0.88 * | Dolomite and Brucite | | 0.45 | 0.3 | 5.5 | 3.6 | 70 |
| 62 | 1.11* | Dolomite and Brucite | | 0.45 | 0.1 | 15.3 | 6.9 | 74 |
| 63 | 1.11* | Dolomite and Brucite | | 0.45 | 0.3 | 5.2 | 3.4 | 71 |
| 64 | 1.5 | Dolomite and Brucite | | 0.45 | 0.1 | 15.8 | 7.2 | 85 |
| 65 | 1.5 | Dolomite and Brucite | | 0.45 | 0.3 | 5.7 | 3.7 | 81 |

EP 1 331 278 B1

(continued)

| No. | Refining Agent | | | | Pretreatment Slag Quantity (T) | $Q(\alpha_{CaO}+\alpha_{MgO})/W(\alpha_{SiO2}+\alpha_{Al2O3})$ Value | (CaO+MgO)/(SiO$_2$+Al$_2$O$_3$) Value of Slag in Treatment | Desulfurization Rate (%) |
|---|---|---|---|---|---|---|---|---|
| | CaO/MgO | CaO Source | MgO Source | Al/MgO | | | | |
| 66 | 2 | Dolomite alone | | 0.45 | 0.1 | 16.4 | 7.4 | 95 |
| 67 | 2 | Dolomite alone | | 0.45 | 0.3 | 5.6 | 3.5 | 93 |
| 68 | 3 | Dolomite and Lime | | 0.45 | 0.1 | 17.3 | 6.8 | 92 |
| 69 | 3 | Dolomite and Lime | | 0.45 | 0.3 | 5.7 | 3.3 | 90 |
| 70 | 4.5 | Dolomite and Lime | | 0.45 | 0.1 | 17.5 | 6.7 | 85 |
| 71 | 4.5 | Dolomite and Lime | | 0.45 | 0.3 | 5.9 | 3.5 | 82 |
| *refining agent not of the claimed invention | | | | | | | | |

Table 7

| No. | Refining Agent | | | | Pretreatment Slag Quantity (T) | $Q(\alpha_{CaO}+\alpha_{MgO})/W(\alpha_{SiO2}+\alpha_{Al2O3})$ Value | $(CaO+MgO)/(SiO_2+Al_2O_3)$ Value of Slag in Treatment | Desulfurization Rate (%) |
|---|---|---|---|---|---|---|---|---|
| | CaO/MgO | CaO Source | MgO Source | Al/MgO | | | | |
| 72 | ∞ | Lime | - | - | 0.15 | 11.7 | 5.4 | 58 |
| 73 | ∞ | Lime | - | - | 0.35 | 5.0 | 3.3 | 52 |
| 74 | 0 | - | Brucite | 0.45 | 0.15 | 11.3 | 5.2 | 10 |
| 75 | 0 | - | Brucite | 0.45 | 0.35 | 4.9 | 3.5 | 9 |
| 76 | 0 | - | Brucite | 0.45 | 0.6 | 3.2 | 2.4 | 6 |
| 77 | 0.88* | Dolomite and Brucite | | 0.45 | 0.6 | 3.0 | 2.4 | 44 |
| 78 | 1.11 * | Dolomite and Brucite | | 0.45 | 0.6 | 2.9 | 2.4 | 48 |
| 79 | 1.5 | Dolomite and Brucite | | 0.45 | 0.6 | 2.8 | 2.3 | 53 |
| 80 | 2 | Dolomite alone | | 0.45 | 0.6 | 3.0 | 2.3 | 61 |
| 81 | 3 | Dolomite and Lime | | 0.45 | 0.6 | 2.9 | 2.5 | 59 |
| 82 | 4.5 | Dolomite and Lime | | 0.45 | 0.6 | 3.1 | 2.3 | 56 |
| 83 | 0.88* | Dolomite and Brucite | | 0.45 | 0.15 | 11.6 | 5.3 | 73 |
| 84 | 0.88* | Dolomite and Brucite | | 0.45 | 0.35 | 5.1 | 3.3 | 71 |
| 85 | 1.11* | Dolomite and Brucite | | 0.45 | 0.15 | 11.5 | 5.2 | 75 |
| 86 | 1.11 * | Dolomite and Brucite | | 0.45 | 0.35 | 5.0 | 3.2 | 72 |
| 87 | 1.5 | Dolomite and Brucite | | 0.45 | 0.15 | 11.7 | 5.1 | 85 |
| 88 | 1.5 | Dolomite and Brucite | | 0.45 | 0.35 | 5.3 | 3.3 | 81 |
| 89 | 2 | Dolomite alone | | 0.45 | 0.15 | 11.8 | 5.5 | 95 |
| 90 | 2 | Dolomite alone | | 0.45 | 0.35 | 5.2 | 3.6 | 93 |
| 91 | 3 | Dolomite and Lime | | 0.45 | 0.15 | 11.8 | 5.3 | 92 |
| 92 | 3 | Dolomite and Lime | | 0.45 | 0.35 | 5.1 | 3.2 | 90 |
| 93 | 4.5 | Dolomite and Lime | | 0.45 | 0.15 | 12.0 | 5.6 | 85 |
| 94 | 4.5 | Dolomite and Lime | | 0.45 | 0.35 | 5.3 | 3.4 | 82 |

*refining agent not of the claimed invention

Table 8

| | No. | Desiliconization | | | | Dephosphorization | | | |
|---|---|---|---|---|---|---|---|---|---|
| | | Refining Agent Quantity | Generated Slag Quantity | Si after Treatment | Temperature after Treatment | Refining Agent Quantity | Generated Slag Quantity | P after Treatment | Temperature after Treatment |
| | | Kg/T | Kg/T | % | °C | Kg/T | Kg/T | % | °C |
| Present Invention Example | 95 | 3.8 | 15.0 | 0.05 | 1440 | – | – | – | – |
| | 96 | 1.4 | 8.1 | 0.15 | 1410 | – | – | – | – |
| | 97 | 3.8 | 15.2 | 0.06 | 1435 | – | – | – | – |
| | 98 | 3.8 | 14.7 | 0.05 | 1430 | 7.0 | 12.4 | 0.008 | 1370 |
| | 99 | 1.4 | 8.3 | 0.15 | 1415 | 12.0 | 20.8 | 0.015 | 1350 |
| | 100 | 3.8 | 14.9 | 0.07 | 1420 | 8.0 | 14.1 | 0.011 | 1360 |
| | 101 | – | – | – | – | 10.5 | 23.7 | 0.029 | 1350 |
| | 102 | – | – | – | – | 13.8 | 26.9 | 0.021 | 1345 |
| | 103 | – | – | – | – | 15.5 | 29.1 | 0.014 | 1350 |
| Comparative Example | 104 | 3.8 | 15.3 | 0.06 | 1445 | – | – | – | – |
| | 105 | 1.4 | 8.0 | 0.15 | 1415 | – | – | – | – |
| | 106 | 3.8 | 14.8 | 0.05 | 1430 | 7.0 | 12.5 | 0.009 | 1370 |
| | 107 | 1.4 | 8.4 | 0.14 | 1420 | 11.8 | 20.5 | 0.013 | 1350 |
| | 108 | – | – | – | – | 10.7 | 23.1 | 0.030 | 1350 |
| | 109 | – | – | – | – | 13.5 | 26.7 | 0.020 | 1345 |

Table 8—continued

| | No. | Desulfurization | | | | Decarburization | | | Series of Treatment | | Process |
|---|---|---|---|---|---|---|---|---|---|---|---|
| | | Refining Agent Quantity | Generated Slag Quantity | S after Treatment | Temperature after Treatment | Refining Agent Quantity | Generated Slag Quantity | C after Treatment | Refining Agent Quantity | Generated Slag Quantity | |
| | | Kg/T | Kg/T | % | °C | Kg/T | Kg/T | % | Kg/T | Kg/T | |
| Present Invention Example | 95 | 5.0 | 6.5 | 0.002 | 1420 | 15.0 | 41.0 | 0.018 | 23.2 | 62.5 | a |
| | 96 | 4.0 | 5.2 | 0.002 | 1390 | 17.0 | 44.5 | 0.019 | 22.4 | 57.8 | a |
| | 97 | 3.5 | 4.6 | 0.005 | 1410 | 15.5 | 43.2 | 0.017 | 22.8 | 63.0 | a |
| | 98 | 5.0 | 6.5 | 0.005 | 1350 | 4.1 | 7.1 | 0.007 | 19.9 | 40.7 | b |
| | 99 | 6.0 | 7.8 | 0.002 | 1330 | 5.0 | 8.7 | 0.010 | 17.5 | 45.0 | b |
| | 100 | 5.0 | 6.5 | 0.004 | 1340 | 3.9 | 6.9 | 0.009 | 20.6 | 42.4 | b |
| | 101 | 6.0 | 7.8 | 0.002 | 1330 | 11.2 | 17.3 | 0.012 | 27.7 | 48.2 | c |
| | 102 | 4.0 | 5.2 | 0.005 | 1325 | 9.6 | 14.7 | 0.010 | 27.4 | 46.8 | c |
| | 103 | 4.0 | 5.2 | 0.004 | 1330 | 4.0 | 6.5 | 0.013 | 23.5 | 40.8 | c |
| Comparative Example | 104 | 10.2 | 13.3 | 0.003 | 1415 | 15.5 | 41.9 | 0.020 | 29.5 | 70.5 | a |
| | 105 | 9.5 | 12.4 | 0.005 | 1385 | 17.5 | 45.2 | 0.021 | 28.4 | 66.4 | a |
| | 106 | 10.2 | 13.4 | 0.003 | 1405 | 5.6 | 8.3 | 0.008 | 26.0 | 49.0 | b |
| | 107 | 9.5 | 12.3 | 0.004 | 1380 | 6.5 | 9.1 | 0.011 | 28.6 | 50.3 | b |
| | 108 | 11.5 | 15.1 | 0.003 | 1320 | 12.2 | 18.8 | 0.012 | 34.4 | 57.0 | c |
| | 109 | 10.5 | 13.8 | 0.005 | 1320 | 10.1 | 14.6 | 0.009 | 34.1 | 54.5 | c |

Table 9

| Process | Average Consumption of Refining Agent (kg/T) | | | Generated Slag Quantity (kg/T) | | |
|---------|------------------|---------------------|------------|------------------|---------------------|------------|
|         | Present Invention | Comparative Example | Difference | Present Invention | Comparative Example | Difference |
| a       | 22.8 | 29.0 | -6.2 | 60.9 | 68.5 | -7.6 |
| b       | 19.3 | 27.3 | -8.0 | 42.7 | 49.7 | -7.0 |
| c       | 26.2 | 34.3 | -8.1 | 45.3 | 55.8 | -10.5 |

Table 10

| No. | Dephosphorization | | | | Desulfurization | | | | | Process |
|---|---|---|---|---|---|---|---|---|---|---|
| | Refining Agent Quantity | Generated Slag Quantity | P after Treatment | Temp. after Treatment | Temp. before Treatment | Refining Agent Quantity | Generated Slag Quantity | S after Treatment | Temp. after Treatment | |
| | Kg/T | Kg/T | % | °C | °C | Kg/T | Kg/T | % | °C | |
| 110 | 15.5 | 29.1 | 0.012 | 1290 | 1280 | 7.2 | 10.2 | 0.003 | 1255 | c |
| 111 | 15.5 | 28.8 | 0.013 | 1340 | 1320 | 6.4 | 8.7 | 0.002 | 1305 | c |
| 112 | 15.5 | 29.0 | 0.013 | 1350 | 1345 | 5.2 | 6.9 | 0.002 | 1330 | c |
| 113 | 15.5 | 29.1 | 0.012 | 1370 | 1360 | 4.2 | 5.4 | 0.002 | 1340 | c |

Table 11

| No. | Desiliconization | | | | | Desulfurization | | | | | | Dephosphorization | | | | | Process |
|---|---|---|---|---|---|---|---|---|---|---|---|---|---|---|---|---|---|
| | Lime Quantity | Fluorite Quantity | Si after Treatment | Temp. after Treatment | Slag (F) | Lime Quantity | Fluorite Quantity | Present Invention Refining Agent | S after Treatment | Temp. after Treatment | Slag (F) | Lime Quantity | Fluorite Quantity | P after Treatment | Temp. after Treatment | Slag (F) | |
| | Kg/T | Kg/T | % | °C | % | Kg/T | Kg/T | Kg/T | % | °C | % | Kg/T | Kg/T | % | °C | % | |
| 114 | 6.0 | - | 0.05 | 1430 | 0.03 | - | - | 6.0 | 0.003 | 1360 | 0.01 | 6.0 | - | 0.012 | 1320 | 0.01 | d |
| 115 | 6.0 | 0.02 | 0.05 | 1420 | 0.10 | - | - | 6.0 | 0.002 | 1350 | 0.02 | 10 | 0.03 | 0.009 | 1320 | 0.05 | d |
| 116 | 6.0 | 0.02 | 0.05 | 1430 | 0.10 | - | - | 6.0 | 0.005 | 1295 | 0.01 | 6.0 | - | 0.010 | 1320 | 0.03 | e |
| 117 | 4.0 | 0.02 | 0.10 | 1400 | 0.14 | - | - | 6.0 | 0.004 | 1300 | 0.02 | 10 | 0.01 | 0.012 | 1330 | 0.06 | e |
| 118 | 6.0 | - | 0.05 | 1420 | 0.01 | - | - | 5.2 | 0.002 | 1390 | 0.03 | 6.0 | - | 0.013 , | 1360 | 0.01 | f |
| 119 | 6.0 | 0.02 | 0.05 | 1420 | 0.07 | - | - | 5.0 | 0.002 | 1410 | 0.02 | 10 | - | 0.012 | 1350 | 0.02 | f |
| 120 | | | | | | - | - | 5.0 | 0.002 | 1400 | 0.02 | 6.0 | 0.05 | 0.008 | 1340 | 0.17 | g |
| 121 | | | | | | - | - | 5.0 | 0.002 | 1405 | 0.02 | 10 | 0.08 | 0.009 | 1330 | 0.20 | g |
| 122 | 6.0 | - | 0.05 | 1435 | 0.04 | 7.6 | 0.4 | - | 0.003 | 1340 | 1.35 | 6.0 | - | 0.010 | 1340 | 0.45 | d |
| 123 | 6.0 | 0.5 | 0.05 | 1430 | 1.73 | | | 6.0 | 0.002 | 1360 | 0.58 | 6.0 | - | 0.009 | 1325 | 0.21 | d |
| 124 | 6.0 | - | 0.05 | 1430 | 0.03 | 7.6 | 0.4 | - | 0.005 | 1295 | 0.67 | 8.0 | 0.8 | 0.012 | 1335 | 2.15 | e |
| 125 | 4.0 | 0.4 | 0.10 | 1400 | 1.65 | - | - | 6.0 | 0.004 | 1300 | 0.21 | 6.0 | - | 0.009 | 1315 | 0.52 | e |
| 126 | 6.0 | - | 0.05 | 1400 | 0.49 | 7.6 | 0.4 | - | 0.002 | 1385 | 1.38 | 6.0 | - | 0.011 | 1375 | 0.23 | f |
| 127 | 6.0 | 0.5 | 0.05 | 1420 | 1.79 | - | - | 6.0 | 0.002 | 1410 | 0.02 | 13 | - | 0.010 | 1335 | 0.39 | f |
| 128 | | | | | | 7.6 | 0.4 | - | 0.002 | 1410 | 1.29 | 6.0 | - | 0.012 | 1370 | 0.43 | g |
| 129 | | | | | | - | - | 6.0 | 0.002 | 1415 | 0.02 | 10 | 0.2 | 0.011 | 1320 | 0.46 | g |

Table 12

| | No. | Refining Agent Arrangement (mass%) | | | Addition Unit Requirement (kg/T) | [S]% | | Desulfrization Rate (%) | T.[O] ppm | |
| --- | --- | --- | --- | --- | --- | --- | --- | --- | --- | --- |
| | | Burnt Dolomite | Burnt Lime | Al dross | | Before Treatment | After Treatment | | Before Treatment | After Treatment |
| Example | 130 | 90 | 0 | 10 | 10 | 0.062 | 0.016 | 74 | 45 | 18 |
| Example | 131 | 50 | 40 | 10 | 10 | 0.059 | 0.012 | 80 | 47 | 17 |
| Example | 132 | 10 | 80 | 10 | 10 | 0.063 | 0.018 | 71 | 44 | 15 |
| Example | 133 | 50 | 40 | 10 | 20 | 0.060 | 0.008 | 87 | 49 | 13 |
| Example | 134 | 44 | 36 | 20 | 10 | 0.058 | 0.013 | 78 | 48 | 16 |
| Example | 135 | 39 | 31 | 30 | 10 | 0.062 | 0.015 | 76 | 45 | 12 |
| Comparative Example | 136 | 0 | 90 | 10 | 10 | 0.058 | 0.024 | 59 | 44 | 29 |
| Comparative Example | 137 | 0 | 90 | 10 | 20 | 0.059 | 0.022 | 63 | 45 | 27 |

Table 13

| | No. | Steel Type | Refining Agent Arrangement (mass%) | | | Addition Unit Requirement (kg/T) | T.[O] ppm | | Inclusion Form | Inclusion MgO (mass%) | Defective Rate (%) |
|---|---|---|---|---|---|---|---|---|---|---|---|
| | | | Burnt Dolomite | Brucite | Al dross | | Before Treatment | After Treatment | | | |
| Example | 138 | Bearing | 45 | 15 | 40 | 3 | 8.2 | 4.5 | A-M | 24 | 0.6 |
| Example | 139 | Bearing | 60 | 20 | 20 | 3 | 8.9 | 4.7 | A-M | 19 | 0.9 |
| Example | 140 | Tire | 67 | 23 | 10 | 3 | 21 | 13 | S-N-M | 8 | 0.5 |
| Example | 141 | Tire | 70 | 25 | 5 | 6 | 23 | 16 | S-N-M | 11 | 0.2 |
| Example | 142 | Tire | 49 | 41 | 10 | 3 | 22 | 15 | S-N-M | 11 | 0.3 |
| Example | 143 | Tire | 90 | 0 | 10 | 3 | 20 | 14 | S-N-M | 6 | 0.7 |
| Comparative Example | 144 | Bearing | 0 | 90 | 10 | 3 | 8.1 | 6.5 | A | 4 | 3.5 |
| Comparative Example | 145 | Bearing | - | - | - | 0 | 8.3 | 7.1 | A | 0 | 6.3 |
| Comparative Example | 146 | Tire | 0 | 90 | 10 | 3 | 20 | 18 | S-N | 2 | 3.2 |
| Comparative Example | 147 | Tire | - | - | - | 0 | 20 | 19 | S-N | 0 | 5.9 |

EP 1 331 278 B1

42

Table 14

| | No. | Adding Method | Refining Agent Arrangement (mass%) | | | | Addition Unit Requirement (kg/T) | [S] ppm | | T.[O] ppm | | MgO (mass%) | Defective Rate (%) |
|---|---|---|---|---|---|---|---|---|---|---|---|---|---|
| | | | Burnt Dolomite | Brucite | Burnt Lime | Al dross | | Before Treatment | After Treatment | Before Treatment | After Treatment | | |
| Example | 148 | INJ | 90 | - | - | 10 | 4 | 48 | 19 | 21 | 9 | 11 | 0.8 |
| Example | 149 | INJ | 50 | - | 40 | 10 | 4 | 51 | 18 | 20 | 10 | 9 | 0.9 |
| Example | 150 | INJ | 45 | 15 | - | 40 | 4 | 47 | 21 | 19 | 7 | 18 | 0.2 |
| Example | 151 | INJ | 60 | 20 | - | 20 | 4 | 49 | 19 | 20 | 8 | 15 | 0.4 |
| Example | 152 | VAC | 50 | - | 40 | 10 | 5 | 48 | 17 | 19 | 11 | 7 | 1.1 |
| Example | 153 | VAC | 45 | 15 | - | 40 | 5 | 50 | 22 | 21 | 9 | 13 | 0.7 |
| Comparative Example | 154 | INJ | 0 | - | 90 | 10 | 4 | 45 | 30 | 18 | 14 | 0 | 5.5 |
| Comparative Example | 155 | INJ | 0 | 90 | - | 10 | 4 | 49 | 47 | 20 | 13 | 4 | 3.7 |
| Comparative Example | 156 | VAC | 0 | - | 90 | 10 | 5 | 46 | 31 | 19 | 15 | 0 | 6.1 |
| Comparative Example | 157 | VAC | 0 | 90 | - | 10 | 5 | 48 | 45 | 18 | 13 | 3 | 4.0 |
| Comparative Example | 158 | No | - | - | - | - | 0 | 47 | 47 | 18 | 15 | 0 | 5.9 |

Table 15

| | No. | Heat Size (ton) | Blowing Gas Flow Rate (Nm³/min) | Refining Agent | | | | Number of Clusters in Slab (index) | Product Defect Index |
| | | | | Adding Method | Addition Quantity (kg/T) | Al/MgO | CaO/MgO | | |
|---|---|---|---|---|---|---|---|---|---|
| Example | 159 | 250 | 2.5 | Water-cooled Lance | 1.8 | 0.05 | 0.75 | 2.1 | 0.2 |
| Example | 160 | 250 | 2.5 | Water-cooled Lance | 2.1 | 0.05 | 1.00 | 1.5 | 0.0 |
| Example | 161 | 250 | 2.5 | Water-cooled Lance | 6.1 | 0.05 | 5.00 | 3.1 | 0.5 |
| Example | 162 | 250 | 4.0 | Water-cooled Lance | 0.8 | 0.30 | 1.00 | 2.1 | 0.0 |
| Example | 163 | 250 | 4.0 | Water-cooled Lance | 2.1 | 0.30 | 5.00 | 0.8 | 0.0 |
| Example | 164 | 250 | 4.0 | Water-cooled Lance | 3.1 | 0.30 | 8.00 | 2.6 | 0.1 |
| Example | 165 | 300 | 3.0 | Raw Material Charge Port | 0.9 | 0.10 | 0.75 | 1.9 | 0.3 |
| Example | 166 | 300 | 3.0 | Raw Material Charge Port | 1.1 | 0.10 | 1.00 | 0.7 | 0.0 |
| Example | 167 | 300 | 3.0 | Raw Material Charge Port | 3.1 | 0.10 | 5.00 | 1.2 | 0.0 |
| Example | 168 | 300 | 3.0 | Raw Material Charge Port | 2.1 | 0.08 | 1.00 | 1.5 | 0.3 |
| Example | 169 | 300 | 3.0 | Raw Material Charge Port | 6.1 | 0.08 | 5.00 | 2.4 | 0.4 |
| Example | 170 | 300 | 3.0 | Raw Material Charge Port | 9.1 | 0.08 | 8.00 | 1.1 | 0.1 |
| Comparative Example | 171 | 250 | 4.0 | No | | | | 10.0 | 2.7 |
| Comparative Example | 172 | 250 | 4.0 | No | | | | 8.0 | 3.1 |

EP 1 331 278 B1

44

(continued)

| | No. | Heat Size (ton) | Blowing Gas Flow Rate (Nm³/min) | Refining Agent | | | | Number of Clusters in Slab (index) | Product Defect Index |
| | | | | Adding Method | Addition Quantity (kg/T) | Al/MgO | CaO/MgO | | |
|---|---|---|---|---|---|---|---|---|---|
| Comparative Example | 173 | 300 | 3.0 | No | | | | 12.0 | 3.0 |
| Comparative Example | 174 | 300 | 3.0 | No | | | | 11.0 | 2.5 |

Table 16

| | | T.Fe | FeO | SiO$_2$ | CaO | Al$_2$O$_3$ | MgO | Ig.loss |
|---|---|---|---|---|---|---|---|---|
| | | | | | Chemical Component Composition (mass%) | | | |
| Ore | Hamersley | 62.8 | 0.3 | 3.7 | 0.1 | 2.3 | 0.05 | 3.4 |
| Ore | Mixture Powder A | 60.5 | 4.7 | 4.4 | 3.1 | 1.7 | 0.5 | 4 |
| Ore | Mixture Powder B | 62.1 | 5.3 | 3.2 | 1.5 | 1.4 | 0.5 | 4 |
| Magnesite | | 0.5 | 0.3 | 0.9 | 0.6 | 0.02 | 45.7 | 50.5 |
| Brucite | | 0.8 | 0.2 | 2.2 | 0.6 | 0.4 | 64.8 | 30.6 |
| Dolomite | | 0.3 | 0.1 | 1 | 33.7 | 0.2 | 19.0 | 47.0 |
| Serpentine | | 5.3 | 2.5 | 38.3 | 1.0 | 0.9 | 38.3 | 13.2 |
| Silica Rock | | 1.3 | 0.5 | 92.2 | 0.1 | 2.6 | 0 | 2.6 |
| Powder Coke | | 0.5 | 0 | 6.4 | 0.4 | 3.6 | 0.1 | 88.0 |
| Return | | 57.8 | 5.0 | 5 | 9.4 | 1.9 | 1.1 | 0 |
| Quick Lime | | 0.1 | 0.0 | 0.7 | 81.2 | 1.4 | 1.1 | 13.3 |
| Lime Stone | | 0.3 | 0.15 | 0.9 | 55.8 | 1.1 . | 0.4 | 42 |
| Desulfurization Slag | | 8.0 | 0.5 | 10.0 | 44.2 | 7.5 | 19.3 | - |

Table 17

| | | | Conventional Example | | | Present Invention Example | | |
|---|---|---|---|---|---|---|---|---|
| No. | | | 175 | 176 | 177 | 178 | 179 | 180 |
| Arrangement (mass%) | Ore | Hamersley | 10 | 10 | 10 | 10 | 10 | 10 |
| Arrangement (mass%) | Ore | Mixture Powder A | 90 | 90 | 90 | 90 | 90 | 90 |
| Arrangement (mass%) | Ore | Mixture Powder B | 0 | 0 | 0 | 0 | 0 | 0 |
| Arrangement (mass%) | Magnesite | | 0 | 2.45 | 0 | 0 | 0 | 0 |
| Arrangement (mass%) | Brucite | | 0 | 0 | 1.72 | 0 | 0 | 0 |
| Arrangement (mass%) | Dolomite | | 0 | 0 | 0 | 0 | 0 | 0 |
| Arrangement (mass%) | Serpentine | | 3 | 0 | 0 | 0 | 0 | 0 |
| Arrangement (mass%) | Silica Rock | | 0 | 0 | 0 | 0.5 | 0.3 | 0.3 |
| Arrangement (mass%) | Powder Coke | | 3.5 | 3.5 | 3.5 | 3.5 | 3.5 | 3.5 |
| Arrangement (mass%) | Return | | 15 | 15 | 15 | 15 | 15 | 1.5 |
| Arrangement (mass%) | Quick Lime | | 1.5 | 1.5 | 1.5 | 1.5 | 1.5 | 1.5 |
| Arrangement (mass%) | Lime Stone | | 13.6 | 9.4 | 9.5 | 8.9 | 4.7 | 4.7 |
| Arrangement (mass%) | Desulfurization Slag | | 0 | 0 | 0 | 6 | 6 | 6 |
| Sintered Ore SiO$_2$ (mass%) | | | 5.3 | 4.5 | 4.5 | 5.3 | 4.5 | 4.5 |
| Sintered Ore MgO (mass%) | | | 1.5 | 1.5 | 1.5 | 1.5 | 1.5 | 1.5 |
| Sintered Ore Al$_2$O$_3$ (mass%) | | | 2.3 | 2.3 | 2.3 | 2.8 | 2.8 | 2.8 |

**Claims**

1. A refining agent as a desulfurizing agent, the refining agent consisting of light-burnt dolomite as a MgO source and a CaO source, a metal Al source, and optionally at least one of another MgO source and another CaO source, all as source materials, optionally along with a forming binder, wherein Al/MgO is 0.05 or more and 0.6 or less in mass ratio, and CaO/MgO is in a range of more than 1.5 and up to 10.0 in mass ratio the source materials are mixed as mixture powder with an average particle size of 1 mm or less, and the forming binder optionally contained sets the mixture powder in a pelletized or lumped form with a size of 3 mm to 40 mm.

2. A refining agent according to claim 1, wherein MgO and CaO in the dolomite are close to or in contact with each other in a minute state.

3. A refining agent according to claim 1 or 2, **characterized in that** the refining agent is in a state prepared by mixing or crushing and mixing a raw material including dolomite and an Al source containing 25 mass% or more metal Al, or a raw material including one of another MgO source and another CaO source in addition to them.

4. A refining agent according to claim 41, wherein the binder has a viscosity of 2 to 10 poise at 60°C.

5. A refining agent according to any one of claims 1 to 4, wherein Al/MgO is 0.2 or more in mass ratio.

6. A refining agent according to any one of claims 1 to 5, wherein CaO/MgO falls in a dolomite composition range.

7. A refining agent according to any one of claims 1 to 5, wherein the MgO source or CaO source other than dolomite is contained for compensating for part of CaO and MgO, which exceeds dolomite composition, so as to obtain a predetermined CaO/MgO.

8. A refining method of refining molten pig iron by performing a series of treatment, **characterized in that** the refining method is formed of desulfurization treatment and at least one of desiliconization treatment and dephosphorization treatment, on molten pig iron after tapping from blast furnace and before decarburization in converter, wherein the desulfurization treatment is performed by adding a refining agent according to any one of claims 1 to 7 to the molten pig iron held in a container.

9. A refining method according to claim 8, wherein silicon concentration in molten pig iron is 0.2 mass% or less before the dephosphorization treatment, phosphorus concentration in molten pig iron is 0.03 mass% or less after the dephosphorization treatment, and sulfur concentration is 0.005 mass% or less after the desulfurization treatment.

10. A refining method according to claim 8, **characterized by** performing at least one of the desiliconization treatment and dephosphorization treatment before the desulfurization treatment.

11. A refining method according to claim 10, **characterized by** performing a treatment immediately before the desulfurization treatment, such that molten pig iron temperature becomes 1,300°C or more before the desulfurization treatment.

12. A refining method according to claim 11, **characterized by** performing a treatment immediately before the desulfurization treatment, such that molten pig iron temperature becomes 1,350°C or more before the desulfurization treatment.

13. A refining method of refining molten pig iron by performing a series of treatment, **characterized in that** the refining method is formed of desulfurization treatment and at least one of desiliconization treatment and dephosphorization treatment, on molten pig iron after tapping from blast furnace and before decarburization in converter, wherein the desulfurization treatment is performed by adding a refining agent according to any one of claims 1 to 7 to the molten pig iron held in a container, and wherein a total consumption of fluorite in the series of treatment is set to be 0.1 kg or less per ton of molten pig iron.

14. A refining method according to claim 13, wherein the refining agent contains substantially no fluorine.

15. A refining method according to claim 13, wherein fluorine concentration is 0.2 mass% or less in slag generated in each treatment of the series of treatment.

**16.** A refining method according to claim 13, wherein fluorine concentration is 0.2 mass% or less in slag in tapping from blast furnace.

**Patentansprüche**

**1.** Ein Raffinationsmittel als ein Entschwefelungsmittel, wobei das Raffinationsmittel aus halbgebranntem Dolomit als einer MgO-Quelle und einer CaO-Quelle, einer Metall-Al-Quelle und wahlweise mindestens einer anderen MgO-Quelle und einer anderen CaO-Quelle besteht, alle als Ausgangsmaterialien, wahlweise gemeinsam mit einem Formbindemittel, worin Al/MgO 0,05 oder mehr und 0,6 oder weniger im Massenverhältnis ausmacht, und CaO/MgO in einem Bereich von mehr als 1,5 und bis zu 10,0 im Massenverhältnis vorliegt, die Ausgangsmaterialien als Mischungspulver mit einer durchschnittlichen Partikelgröße von 1 mm oder weniger gemischt werden, und das wahlweise enthaltene Formbindemittel das Mischungspulver in eine pelletierte oder verklumpte Form mit einer Größe von 3 mm bis 40 mm setzt.

**2.** Ein Raffinationsmittel gemäß Anspruch 1, worin MgO und CaO in dem Dolomit in einem sehr kleinen Zustand nahe beieinander oder in Kontakt miteinander sind.

**3.** Ein Raffinationsmittel gemäß Anspruch 1 oder 2, **dadurch gekennzeichnet, dass** das Raffinationsmittel in einem Zustand ist, der hergestellt wird durch Mischen oder Zerkleinern und Mischen eines Rohmaterials, das Dolomit und eine Al-Quelle einschließt, die 25 Massenprozent oder mehr Metall-Al enthält, oder eines Rohmaterials, das zusätzlich dazu eines von einer anderen MgO-Quelle und einer anderen CaO-Quelle einschließt.

**4.** Ein Raffinationsmittel gemäß Anspruch 1, worin das Bindemittel eine Viskosität von 2 bis 10 Poise bei 60°C hat.

**5.** Ein Raffinationsmittel gemäß einem beliebigen der Ansprüche 1 bis 4, worin Al/MgO im Massenverhältnis 0,2 oder mehr vorliegt.

**6.** Ein Raffinationsmittel gemäß einem beliebigen der Ansprüche 1 bis 5, worin CaO/MgO in einen Dolomit-Zusammensetzungsbereich fällt.

**7.** Ein Raffinationsmittel gemäß einem beliebigen der Ansprüche 1 bis 5, worin die MgO-Quelle oder CaO-Quelle, die nicht Dolomit ist, enthalten ist, um einen Teil von CaO und MgO zu kompensieren, der die Dolomit-Zusammensetzung überschreitet, um ein vordefiniertes CaO/MgO zu erhalten.

**8.** Ein Raffinationsverfahren zur Raffination von geschmolzenem Roheisen durch Durchführen einer Behandlungsreihe, **dadurch gekennzeichnet, dass** das Raffinationsverfahren aus einer Entschwefelungsbehandlung und mindestens einem einer Entsilikonisierungsbehandlung und einer Entphosphorungsbehandlung an geschmolzenem Roheisen nach Abstich aus dem Hochofen und vor Entkohlung in einem Konverter besteht, worin die Entschwefelungsbehandlung durchgeführt wird durch Hinzugabe eines Raffinationsmittels gemäß einem beliebigen der Ansprüche 1 bis 7 zum geschmolzenen Roheisen, das in einem Behälter enthalten ist.

**9.** Ein Raffinationsverfahren gemäß Anspruch 8, worin die Siliziumkonzentration in geschmolzenem Roheisen vor der Entphosphorungsbehandlung 0,2 Massenprozent oder weniger beträgt, die Phosphorkonzentration in geschmolzenem Roheisen 0,03 Massenprozent oder weniger nach der Entphosphorungsbehandlung beträgt und die Schwefelkonzentration 0,005 Massenprozent oder weniger nach der Entschwefelungsbehandlung beträgt.

**10.** Ein Raffinationsverfahren gemäß Anspruch 8, **gekennzeichnet durch** Durchführung von mindestens einer der Entsilikonisierungsbehandlung und/oder der Entphosphorungsbehandlung vor der Entschwefelungsbehandlung.

**11.** Ein Raffinationsverfahren gemäß Anspruch 10, **gekennzeichnet durch** Durchführung einer Behandlung direkt vor der Entschwefelungsbehandlung, so dass die Temperatur des geschmolzenen Roheisens vor der Entschwefelungsbehandlung 1.300°C oder mehr wird.

**12.** Ein Raffinationsverfahren gemäß Anspruch 11, **gekennzeichnet durch** Durchführung einer Behandlung direkt vor der Entschwefelungsbehandlung, so dass die Temperatur des geschmolzenen Roheisens vor der Entschwefelungsbehandlung 1.350°C oder mehr wird.

**13.** Ein Raffinationsverfahren zur Raffination von geschmolzenem Roheisen durch Durchführung einer Behandlungsreihe, **dadurch gekennzeichnet, dass** das Raffinationsverfahren aus einer Entschwefelungsbehandlung und mindestens einem von einer Entsilikonisierungsbehandlung und einer Entphosphorungsbehandlung an geschmolzenem Roheisen nach Abstich aus dem Hochofen und vor Entkohlung in einem Konverter besteht, worin die Entschwefelungsbehandlung durchgeführt wird durch Hinzugabe eines Raffinationsmittels gemäß einem beliebigen der Ansprüche 1 bis 7 zum geschmolzenen Roheisen, das in einem Behälter enthalten ist, und worin ein Gesamtverbrauch von Fluorit in der Behandlungsreihe festgesetzt ist auf 0,1 kg oder weniger pro Tonne geschmolzenen Roheisens.

**14.** Ein Raffinationsverfahren gemäß Anspruch 13, worin das Raffinationsmittel im Wesentlichen kein Fluor enthält.

**15.** Ein Raffinationsverfahren gemäß Anspruch 13, worin die Fluorkonzentration 0,2 Massenprozent oder weniger in der Schlacke beträgt, die in jeder Behandlung der Behandlungsreihe erzeugt wird.

**16.** Ein Raffinationsverfahren gemäß Anspruch 13, worin die Fluorkonzentration 0,2 Massenprozent oder weniger in der Schlacke im Abstich aus dem Hochofen beträgt.

**Revendications**

**1.** Agent de raffinage utilisé en tant qu'agent de désulfuration, l'agent de raffinage étant constitué de dolomite légèrement calcinée servant de source de MgO et de source de CaO, d'une source de métal Al, et éventuellement d'au moins une autre source de MgO et une autre source de CaO, toutes servant de matériaux sources, éventuellement conjointement avec un liant de formation, dans lequel le rapport en masse Al/MgO est de 0,05 ou plus et de 0,6 oui moins, et le rapport en masse CaO/MgO est situé dans la plage allant de plus de 1,5 jusqu'à 10,0, les matériaux sources sont mélangés sous la forme d'un mélange pulvérulent ayant une granulométrie moyenne de 1 mm ou moins, et le liant de formation éventuellement contenu stabilise le mélange pulvérulent sous la forme de pastilles ou d'agrégats ayant une taille de 3 mm à 40 mm.

**2.** Agent de raffinage selon la revendication 1, dans lequel MgO et CaO dans la dolomite sont proches ou en contact l'un avec l'autre à l'état minuscule.

**3.** Agent de raffinage selon la revendication 1 ou 2, **caractérisé en ce que** l'agent de raffinage est dans un état préparé par mélange ou broyage et mélange d'une matière première contenant de la dolomite et d'une source d'Al contenant 25 % en masse ou plus d'Al métallique, ou d'une matière première contenant l'une parmi une autre source de MgO et une autre source de CaO en plus de celles-ci.

**4.** Agent de raffinage selon la revendication 1, dans lequel le liant a une viscosité de 2 à 10 poises à 60°C.

**5.** Agent de raffinage selon l'une quelconque des revendications 1 à 4, dans lequel le rapport en masse Al/MgO est de 0,2 ou plus.

**6.** Agent de raffinage selon l'une quelconque des revendications 1 à 5, dans lequel le rapport CaO/MgO se trouve dans une plage de composition de dolomite.

**7.** Agent de raffinage selon l'une quelconque des revendications 1 à 5, dans lequel la source de MgO, ou la source de CaO autre que la dolomite est présente pour compenser une partie du CaO et MgO qui dépasse la composition de dolomite, de façon que soit obtenu un rapport CaO/MgO prédéterminé.

**8.** Procédé de raffinage pour raffiner une fonte brute fondue par mise en oeuvre d'une série de traitements, **caractérisé en ce que** le procédé de raffinage est constitué d'un traitement de désulfuration et d'au moins l'un parmi un traitement de désilicification et un traitement de déphosphoration, sur une fonte brute fondue après coulée hors d'un haut fourneau et avant décarburation dans un convertisseur, dans lequel le traitement de désulfuration est effectué par addition d'un agent de raffinage selon l'une quelconque des revendications 1 à 7 à la fonte brute fondue maintenue dans un récipient.

**9.** Procédé de raffinage selon la revendication 8, dans lequel la concentration de silicium dans la fonte brute fondue est de 0,2 % en masse ou moins avant le traitement de déphosphoration, la concentration de phosphore dans la fonte brute fondue est de 0,03 % en masse ou moins après le traitement de déphosphoration, et la concentration de soufre est de 0,005 % en masse ou moins après le traitement de désulfuration.

10. Procédé de raffinage selon la revendication 8, **caractérisé par** la mise en oeuvre d'au moins l'un parmi un traitement de désilicification et un traitement de déphosphoration avant le traitement de désulfuration.

11. Procédé de raffinage selon la revendication 10, **caractérisé par** la mise en oeuvre d'un traitement immédiatement avant le traitement de désulfuration, de façon que la température de la fonte brute fondue devienne de 1300°C ou plus avant le traitement de désulfuration.

12. Procédé de raffinage selon la revendication 11, **caractérisé par** la mise en oeuvre d'un traitement immédiatement avant le traitement de désulfuration, de façon que la température de la fonte brute fondue devienne de 1350°C ou plus avant le traitement de désulfuration.

13. Procédé de raffinage pour raffiner une fonte brute fondue par mise en oeuvre d'une série de traitements, **caractérisé en ce que** le procédé de raffinage est constitué d'un traitement de désulfuration et d'au moins l'un parmi un traitement de désilicification et un traitement de déphosphoration, sur une fonte brute fondue après coulée hors d'un haut fourneau et avant décarburation dans un convertisseur, dans lequel le traitement de désulfuration est effectué par addition d'un agent de raffinage selon l'une quelconque des revendications 1 à 7 à la fonte brute fondue maintenue dans un récipient, et dans lequel la consommation totale de fluorite dans la série de traitements est établie de façon à être de 0,1 kg ou moins par tonne de fonte brute fondue.

14. Procédé de raffinage selon la revendication 13, dans lequel l'agent de raffinage ne contient pratiquement pas de fluor.

15. Procédé de raffinage selon la revendication 13, dans lequel la concentration de fluor est de 0,2 % en masse ou moins dans le laitier généré lors de chaque traitement de la série de traitements.

16. Procédé de raffinage selon la revendication 13, dans lequel la concentration de fluor est de 0,2 % en masse ou moins dans le laitier de la coulée provenant du haut fourneau.

IN THE CASE OF DOLOMITE

IN THE CASE OF A MIXTURE
OF LIME AND BRUCITE.

FIG.1

FIG.2

FIG.3

FIG.4

FIG.5

FIG.6

FIG.7

FIG.8

MAIN FORM OF
AGGLOMERATED STATE

IMAGE OF CREATING
NEW SURFACE

MECHANICALLY
STIRRING TYPE
DESULFURIZATION
SLAG

NON-REACTED
REFINING AGENT

SULFIDE

INJECTION TYPE
DESULFURIZATION
SLAG

NON-REACTED
REFINING AGENT

SULFIDE

FIG.9

SLAG TREATMENT PATTERN BY PRACTICAL MACHINE

SLAG RAKING

TRANS-PORTATION

UNLOADING AT SLAG TREATMENT PLACE

LARGE LUMP REMOVAL

--IF NECESSARY--

COOLING AND CRUSHING STEP

NO WATERING

APPROPRIATE AMOUNT OF WATERING

WATERING

MECHANICAL CRUSHING

PERFORM ONE OF THEM

SCREENING

DRYING

MECHANICAL CRUSHING

--IF NECESSARY---

LOADING AND TRANSPORTATION STEP

TRANSPORTATION BY VACUUM CAR

TRANSPORTATION BY TRUCK OR THE LIKE

PERFORM ONE OF THEM

REUSE

FIG.10

FIG.11

FIG.12

59

FIG.13

FIG.14

**EP 1 331 278 B1**

## REFERENCES CITED IN THE DESCRIPTION

### Patent documents cited in the description

- JP 10017913 A
- US 5366539 A